(19) Europäisches Patentamt / European Patent Office / Office européen des brevets

(11) **EP 3 583 402 B1**

(12) **FASCICULE DE BREVET EUROPEEN**

(45) Date de publication et mention de la délivrance du brevet:
**31.08.2022 Bulletin 2022/35**

(21) Numéro de dépôt: **18705002.6**

(22) Date de dépôt: **20.02.2018**

(51) Classification Internationale des Brevets (IPC):
**G01N 15/00** *(2006.01)*　　**G01N 15/14** *(2006.01)*
**G01N 15/02** *(2006.01)*

(52) Classification Coopérative des Brevets (CPC):
**G01N 15/0211; G01N 15/1436; G01N 15/1459;**
G01N 2015/0046; G01N 2015/1486

(86) Numéro de dépôt international:
**PCT/EP2018/054112**

(87) Numéro de publication internationale:
**WO 2018/150044 (23.08.2018 Gazette 2018/34)**

(54) **DETECTEUR OPTIQUE DE PARTICULES ET PROCEDE DE FABRICATION D'UN DETECTEUR DE PARTICULES**

OPTISCHER PARTIKELDETEKTOR UND VERFAHREN ZUR HERSTELLUNG EINES OPTISCHEN PARTIKELDETEKTOR

OPTICAL PARTICLE DETECTOR AND METHOD OF MANUFACTURING AN OPTICAL PARTICLE DETECTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.02.2017 FR 1751343**

(43) Date de publication de la demande:
**25.12.2019 Bulletin 2019/52**

(73) Titulaire: **Commissariat à l'Énergie Atomique et aux Énergies Alternatives**
**75015 Paris (FR)**

(72) Inventeurs:
• **BOUTAMI, Salim**
 **38100 Grenoble (FR)**
• **DUPOY, Mathieu**
 **38500 Coublevie (FR)**
• **FEDELI, Jean-Marc**
 **38120 Saint-Egreve (FR)**

(74) Mandataire: **Hautier IP**
**20, rue de la Liberté**
**06000 Nice (FR)**

(56) Documents cités:
| | |
|---|---|
| **CN-A- 104 280 321** | **US-A- 4 739 177** |
| **US-A- 5 273 633** | **US-A- 5 793 485** |
| **US-B1- 6 580 504** | |

**Description**

DOMAINE TECHNIQUE DE L'INVENTION

La présente invention concerne le domaine de la détection optique de particules en général et plus particulièrement de particules de taille micrométrique, voire nanométrique. Elle trouvera pour application particulièrement avantageuse mais non limitative la détection des particules de fumée pour détecter les incendies ou encore la détection des particules polluantes et notamment les particules dites fines.

ETAT DE LA TECHNIQUE

Les détecteurs de particules sont généralement basés sur la diffraction de la lumière visible, ou proche infrarouge, par des particules. Ces détecteurs comportent ainsi généralement des capteurs optiques configurés pour mesurer la diffraction de la lumière par les particules.

Les détecteurs comprennent une source de lumière et un canal à travers lequel passent les particules à détecter. En l'absence de particules, il n'y a pas de diffraction, les capteurs optiques ne mesurent donc pas de lumière. En présence de particules, la lumière est diffusée par les particules et les capteurs optiques détectent la lumière diffusée dans leur angle solide de détection. Cette mesure permet ainsi de détecter une ou plusieurs particules. Alors que l'intensité de la lumière diffusée et son diagramme angulaire sont des caractéristiques de la nature, de la forme, de la taille et de la concentration des particules, les solutions connues ne permettent pas de mesurer l'ensemble de ces caractéristiques de manière fidèle, à un coût raisonnable et en occupant un encombrement limité.

Le document US 5 793 485 A et le document CN 104 280 321 A divulguent, chacun, un détecteur de particules dans lequel des surfaces réfléchissantes permettent à la lumière qui traverse le détecteur d'être dirigée vers les particules et réfléchie par ces dernières.

Le document FR2963101 décrit une solution existante. Cette solution prévoit une source de lumière véhiculée par un guide d'ondes qui illumine un canal gravé dans un substrat de silicium et à travers lequel des particules vont circuler. La diffraction de la lumière incidente par ces particules est détectée par deux photodiodes périphériques réalisées sur le substrat de silicium.

Cette solution permet de réduire l'encombrement du capteur. En revanche, il est extrêmement difficile avec ce type de solution d'obtenir des informations suffisamment précises et complètes sur les particules.

Il est notamment difficile, voire impossible, de déterminer la nature des particules.

Il existe donc un besoin consistant à proposer une solution pour améliorer la précision et la quantité d'informations relatives aux particules, afin par exemple de déterminer leur nature.

Tel est l'objectif de la présente invention.

RESUME DE L'INVENTION

La présente invention concerne un détecteur de particules comprenant au moins :

   ○ un canal destiné à recevoir au moins un fluide comprenant des particules;
   ○ une entrée optique configurée pour recevoir au moins un rayonnement lumineux incident.

Le détecteur comprend en outre :

   ○ une première pluralité de surfaces réfléchissantes, apte à réfléchir le rayonnement lumineux incident, disposée entre l'entrée optique et le canal et configurée pour définir des ouvertures permettant à une partie au moins du rayonnement lumineux incident provenant de l'entrée optique d'atteindre le canal ;
   ○ une matrice de photodétecteurs disposée en regard du canal. Le détecteur comprend une deuxième pluralité de surfaces réfléchissantes, apte à réfléchir le rayonnement lumineux incident, disposée entre le canal et la matrice de photodétecteurs et de sorte que le canal soit situé entre les première et deuxième pluralités de surfaces réfléchissantes.

La première et la deuxième pluralité de surfaces réfléchissantes, la matrice de photodétecteurs et l'au moins un canal sont disposés de sorte à ce que, si des particules sont présentes dans le canal, une partie au moins du rayonnement lumineux incident traversant le canal soit diffusée par au moins une particule présente dans le canal formant ainsi des rayons lumineux diffusés et de sorte qu'une partie au moins desdits rayons lumineux diffusés parvienne ensuite sur la matrice de photodétecteurs, en passant entre les surfaces réfléchissantes de la deuxième pluralités de surfaces réfléchissantes et optionnellement après avoir été réfléchie sur au moins une surface réfléchissante de la première pluralité de surfaces réfléchissantes.

Les surfaces réfléchissantes de la deuxième pluralité s'étendent principalement selon un plan et sont espacées les unes des autres dans ce plan pour ménager entre elles des espaces, de sorte que les rayons lumineux diffusés peuvent passer du canal à la matrice de photodétecteurs en passant par lesdits espaces. Ainsi, les rayons lumineux diffusés peuvent passer du canal à la matrice de photodétecteurs sans traverser de surface réfléchissante de ladite deuxième pluralité.

L'association du canal, des première et deuxième pluralités de surfaces réfléchissantes et de la matrice de photodétecteurs, permet de capter un plus grand nombre de rayons lumineux diffusés par les particules.

En effet, la matrice de photodétecteurs peut recevoir les rayons lumineux diffusés par les particules et qui parviennent :

○ directement sur la matrice de photodétecteurs, c'est-à-dire sans réflexion sur les surfaces réfléchissantes ;

○ les rayons lumineux qui parviennent sur la matrice de photodétecteurs après une première réflexion par la première pluralité de surfaces réfléchissantes

○ les rayons lumineux qui parviennent sur la matrice de photodétecteurs après une ou plusieurs réflexions sur les première et deuxième pluralités de surfaces réfléchissantes.

L'invention permet ainsi d'augmenter le diagramme de diffraction auquel l'on a accès.

En effet, dans le cadre du développement de la présente invention il a été remarqué que dans une solution du type de celle décrite dans le document FR2963101 cité ci-dessus, les photodétecteurs captent la lumière diffusée latéralement et détectent un angle solide de la diffraction qui est très limité. Ce type de solution ne permet alors d'accéder qu'à une portion limitée du diagramme de diffraction ce qui réduit la richesse des informations disponibles et limite la connaissance que l'on peut avoir des particules, en particulier leur nature.

Avec l'invention, la combinaison des première et deuxième pluralités de surfaces réfléchissantes, de la matrice de photodétecteurs, de l'entrée optique et du canal permet d'approximer à une mesure bidimensionnelle une diffraction tridimensionnelle.

La présente invention permet ainsi une projection sur une même matrice de photodiodes d'un très grand nombre de faisceaux lumineux diffusés dans des directions variées en trois dimensions.

La géométrie de la présente invention permet une projection d'un espace vectoriel de propagation tridimensionnelle vers un espace de mesure bidimensionnel.

L'invention permet ainsi de collecter des informations en plus grande quantité et plus précises concernant les particules. La détection des particules et l'identification de leurs paramètres, tel que leurs tailles, leur indice de diffraction optique ou leur nature, est donc améliorée.

De plus, la présente invention permet de réduire voire d'éviter l'aveuglement des photodétecteurs de la matrice de photodétecteurs par le rayonnement lumineux incident via l'utilisation d'une première et d'une deuxième pluralité de surfaces réfléchissantes complémentaires, de sorte à ce que seuls les rayons lumineux diffusés parviennent jusqu'aux photodétecteurs de la matrice de photodétecteurs. Cela permet alors d'augmenter la sensibilité de détection de particules de la présente invention.

La présente invention concerne aussi un procédé de fabrication d'un détecteur de particules, comprenant au moins les étapes suivantes :

○ Fournir au moins un premier substrat comprenant au moins une première pluralité de surfaces réfléchissantes, apte à réfléchir le rayonnement lumineux incident et s'étendant selon un premier plan parallèle à un plan principal (x, y) et comprenant au moins une entrée optique configurée pour recevoir au moins un rayonnement lumineux incident selon une direction inclinée par rapport, de préférence perpendiculaire (z), au plan principal (x, y), la première pluralité de surfaces réfléchissantes et l'entrée optique étant disposées de part et d'autre du premier substrat ;

○ Fournir au moins un deuxième substrat comportant au moins une deuxième pluralité de surfaces réfléchissantes, apte à réfléchir le rayonnement lumineux incident, le deuxième substrat s'étendant selon un deuxième plan parallèle au plan principal (x, y) ;

○ Fournir au moins un troisième substrat comprenant au moins une matrice de photodétecteurs s'étendant selon un troisième plan parallèle au plan principal (x, y) ;

○ Former un empilement s'étendant dans le plan principal (x, y) en assemblant le premier substrat, le deuxième substrat et le troisième substrat de sorte que :

■ les premier (20) et deuxième (30) substrats délimitent, dans le plan (z, x), au moins en partie, et de préférence entièrement, un canal de circulation de particules ;

■ les première (22) et deuxième (32) pluralités de surfaces réfléchissantes soient situées entre la matrice de photodétecteurs et l'entrée optique ;

■ la première et la deuxième pluralité de surfaces réfléchissantes, la matrice de photodétecteurs et le canal étant disposées de sorte à ce que, si des particules sont présentes dans le canal, une partie au moins du rayonnement lumineux incident traversant le canal soit diffusée par au moins une particule présente dans le canal formant ainsi des rayons lumineux diffusés et de sorte qu'une partie au moins desdits rayons lumineux diffusés parvienne sur la matrice de photodétecteurs en passant entre les surfaces réfléchissantes de la deuxième pluralité de surfaces réfléchissantes, et optionnellement après avoir été réfléchie sur au moins une surface réfléchissante de la première pluralité de surfaces réfléchissantes.

L'empilement est formé de sorte que les surfaces réfléchissantes de la deuxième pluralité s'étendent principalement selon un plan et sont espacées les unes des autres dans ce plan pour ménager entre elles des espaces, de sorte que les rayons lumineux diffusés peuvent passer du canal à la matrice de photodétecteurs en passant entre les surfaces réfléchissantes de la deuxième pluralités de surfaces réfléchissantes et sans traverser de surface réfléchissante de ladite deuxième pluralité. Ce procédé a pour avantage, entre autre, d'être aisément reproductible et de permettre l'obtention d'un détecteur précis à un coût qui reste limité.

BREVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :

La **figure 1** est une vue en coupe selon le plan (z, x) d'un détecteur de particules selon un premier mode de réalisation de l'invention. La figure 1 représente une disposition possible d'un premier et d'un deuxième substrats relativement à une matrice de photodétecteurs, à un canal de circulation de particules et à au moins une entrée optique. Les chemins optiques de rayons lumineux incidents, diffusés et réfléchis une ou plusieurs fois sont représentés.

Les **figures 2a à 2i** illustrent des étapes d'un exemple de procédé de formation d'un détecteur de particules selon le mode de réalisation illustré en figure 1.

La **figure 3** est une vue en coupe dans le plan (z, x) d'un détecteur de particules selon un deuxième mode de réalisation de l'invention. Sur cette figure 3, le positionnement possible d'un miroir de Bragg supérieur relativement à l'ensemble des éléments précédemment présents en figure 1 est représenté.

Les **figures 4a à 4i** illustrent des étapes d'un exemple de procédé de formation d'un détecteur de particules selon le mode de réalisation illustré en figure 3.

La **figure 5** est une vue en coupe dans le plan (z, x) d'un détecteur de particules selon un troisième mode de réalisation de l'invention. Selon ce troisième mode de réalisation, le deuxième substrat comprend une pluralité de miroirs de Bragg inférieurs.

Les **figures 6a à 6l** illustrent des étapes d'un exemple de procédé de formation d'un détecteur de particules selon le mode de réalisation illustré en figure 5.

Les **figures 7a et 7b** représentent deux simulations numériques permettant d'évaluer le signal dit « diffusé » mesuré au niveau de la matrice de photodétecteurs d'un détecteur de particules selon la présente invention en présence d'un miroir de Bragg supérieur du type $SiN/SiO_2$ au niveau du premier substrat. La figure 7a correspond au cas où le deuxième substrat comprend une pluralité de surfaces réfléchissantes métalliques. La figure 7b correspond au cas où le deuxième substrat comprend une pluralité de miroirs de Bragg inférieurs du type $SiN/SiO_2$.

Les dessins joints sont donnés à titre d'exemples et ne sont pas limitatifs de l'invention. Ces dessins sont des représentations schématiques et ne sont pas nécessairement à l'échelle de l'application pratique. En particulier les épaisseurs relatives des différentes couches, surfaces réfléchissantes, canal, photodétecteurs et autres structures ne sont pas représentatives de la réalité.

DESCRIPTION DETAILLEE DE L'INVENTION

Il est précisé que dans le cadre de la présente invention, les termes « sur », « surmonte », « recouvre » ou « sous-jacent » ou leurs équivalents ne signifient pas « au contact de ». Ainsi par exemple, le dépôt d'une première couche sur une deuxième couche, ne signifie pas obligatoirement que les deux couches sont directement au contact l'une de l'autre mais cela signifie que la première couche recouvre au moins partiellement la deuxième couche en étant soit directement à son contact soit en étant séparée d'elle par au moins une autre couche ou au moins un autre élément.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre exemplaire et non limitatif.

Dans la description qui suit, des numéros de référence similaires seront utilisés pour décrire des concepts similaires à travers des modes de réalisation différents de l'invention.

Dans la description qui suit, un repère orthonormé (x, y, z) est représenté dans les figures et peut servir à définir les positions et extensions spatiales des divers éléments décrits ci-après. Dans la présente description, un plan (x, y) est compris comme appartenant à et désignant l'ensemble des plans parallèles au plan (x, y) du repère illustré.

Dans le cadre de la présente invention, le terme « particule », ou ses équivalents, ont pour définition un constituant d'un système physique considéré comme élémentaire par rapport aux propriétés étudiées. Par exemple une particule est un élément de matière dont la plus grande dimension est inférieure au millimètre ($10^{-3}$ mètres) et de préférence à quelques dizaines de micromètres ($10^{-6}$ mètres) et de préférence inférieure au micromètre, voire de l'ordre du nanomètre ($10^{-9}$ m). De manière générale, il s'agit d'objets composés de matière dont les dimensions sont petites par rapport aux dimensions du canal de circulation des particules.

De manière préférée dans le cadre de la présente invention, les termes « rayonnement lumineux », « onde » ou « rayon » ou leurs équivalents ont pour définition un flux électromagnétique ayant une longueur d'onde principale lambda ou une longueur d'onde lambda moyenne autour de la longueur d'onde principale avec un écart type de préférence inférieur ou de l'ordre de 20% par exemple et se propageant de préférence selon une seule direction principale ou une direction moyenne autour de la direction principale avec un écart type inférieur ou de l'ordre de 10% par exemple. Cette direction de propagation est appelée également « chemin optique ».

Dans ce qui suit, le terme « diffraction », « diffusion » ou leurs équivalents se réfèrent au phénomène par lequel un milieu de propagation produit une répartition, dans de nombreuses directions, de l'énergie d'une onde électromagnétique, lumineuse par exemple. Ainsi par exemple un rayon lumineux diffusé par une particule se comprend comme un rayon lumineux ayant une direction de propagation avant interaction avec la particule différente de sa direction de propagation après interaction avec la particule.

Dans ce qui suit, le terme « transparence » ou ses équivalents se réfère au phénomène de laisser relativement se propager un rayonnement lumineux dans un matériau dit transparent. Dans la présente description, un matériau est considéré comme transparent dès lors qu'il laisse passer au moins 50% d'un rayonnement lumineux, de préférence au moins 75% et avantageusement au moins 90%.

Dans ce qui suit, le terme « réflexion » ou ses équivalents se réfère au phénomène de réémission depuis un élément ou une surface d'un rayonnement lumineux incident. Dans la présente description, un élément est jugé réfléchissant dès lors qu'il réémet une partie au moins d'un rayonnement lumineux incident. Un élément présente dès lors un coefficient de réflectivité variant de 0% pour un élément non réfléchissant à 100% pour un élément réfléchissant entièrement un rayonnement lumineux incident.

Il est précisé que, dans le cadre de la présente invention, un « miroir de Bragg supérieur » est un dispositif comprenant une alternance de couches dont les matériaux présentent des indices de réfraction différents. Il s'agit d'une structure multicouches dans laquelle au moins deux couches d'indice de réfraction différent s'alternent une pluralité de fois, le nombre d'alternance correspondant à un nombre de périodes P du miroir de Bragg considéré, la période P se comprend ici de l'épaisseur, de préférence en nanomètre, d'une alternance de couches.

On entend, dans ce qui suit, par « aveuglement » ou ses équivalents, un phénomène de saturation d'un capteur ou récepteur optique par une ou plusieurs sources lumineuses.

Avant d'entamer une revue détaillée de modes de réalisation de l'invention, sont énoncées ci-après des caractéristiques optionnelles qui peuvent éventuellement être utilisées en association ou alternativement :

- Avantageusement, les première et deuxième pluralités de surfaces réfléchissantes sont agencées de manière complémentaire de sorte à ce que tous les photodétecteurs de la matrice disposés au droit de l'au moins une entrée optique selon la direction principale de propagation (z) soient masqués par au moins une surface réfléchissante de l'une parmi la première et la deuxième pluralité de surfaces réfléchissantes.

La présente invention assure ainsi le non aveuglement des photodétecteurs par le rayonnement lumineux incident, rendant ainsi les photodétecteurs sensibles uniquement aux rayons lumineux diffusés.

- Avantageusement, les première et deuxième pluralités de surfaces réfléchissantes sont agencées de manière complémentaire de sorte à ce que les surfaces réfléchissantes de la première pluralité de surfaces réfléchissantes ne soient pas disposées au droit selon la direction perpendiculaire (z) des surfaces réfléchissantes de la deuxième pluralité de surfaces réfléchissantes.

Ainsi les première et deuxième pluralités de surfaces réfléchissantes ne présentent pas de zones de recouvrement. Cela permet d'augmenter la quantité de rayons diffusés qui sont captés par les photodétecteurs.

Cet agencement complémentaire, par exemple en quinconce, permet d'éviter que les photodétecteurs ne soient aveuglés par le rayonnement lumineux incident, les photodétecteurs ne reçoivent que les rayons lumineux diffusés.

- Avantageusement, la présente invention est configurée de sorte qu'une partie au moins du rayonnement lumineux incident soit réfléchie par une partie au moins de la deuxième pluralité de surfaces réfléchissantes avant d'être diffusé par au moins une particule.

- Au moins une partie desdites première et/ou desdites deuxième pluralités de surfaces réfléchissantes est portée en partie au moins par une paroi du canal.

- Avantageusement, les première et deuxième pluralités de surfaces réfléchissantes sont agencées de sorte à définir entre elles au moins une cavité optique, de préférence résonante, relativement au rayonnement lumineux incident.

- Selon un mode de réalisation avantageux, le dimensionnement de cette cavité optique est réalisé de sorte à la rendre résonante relativement aux paramètres physiques du rayonnement lumineux incident. Cette cavité optique devient alors une cavité dite Fabry-Pérot. La présente invention bénéficie alors de ce phénomène ondulatoire afin d'accroitre la qualité de sa lecture du diagramme de diffraction.

De plus, la présence d'une cavité optique résonante permet d'amplifier le rayonnement lumineux incident, couramment appelé la « pompe ».

De par la relation proportionnelle existant entre l'intensité lumineuse de la pompe au niveau du canal et l'intensité lumineuse des rayons lumineux diffusés, l'utilisation d'une cavité optique résonante accroît considérablement l'intensité des rayons lumineux diffusés reçus au niveau de la matrice de photodétecteurs.

- La deuxième pluralité de surfaces réfléchissantes est configurée de manière à définir entre les surfaces réfléchissantes des espaces de passage, également désignés ouvertures optiques, pour le flux lumineux. Ces espaces de passage ne comprennent pas de surfaces réfléchissantes, de sorte que les rayons lumineux diffusés peuvent passer du canal à la matrice de photodétecteurs sans traverser de surface réfléchissante de ladite deuxième pluralité.
- Les surfaces réfléchissantes de la première pluralité de surfaces réfléchissantes sont métalliques.
- Les surfaces réfléchissantes de la deuxième pluralité de surfaces réfléchissantes sont métalliques.
- Les surfaces réfléchissantes de la première pluralité de surfaces réfléchissantes présentent au moins une discontinuité dans le plan (x, y).
- Les surfaces réfléchissantes de la deuxième pluralité de surfaces réfléchissantes présentent au moins une discontinuité dans le plan (x, y).

  - Selon un exemple de réalisation, les surfaces réfléchissantes de la première pluralité s'étendent principalement selon un plan et sont espacées les unes des autres dans ce plan pour ménager entre elles des espaces également désignées ouvertures. Le détecteur est configuré de sorte que le rayonnement lumineux incident parvienne jusqu'au canal sans traverser de surface réfléchissante de ladite première pluralité. Le rayonnement lumineux incident parvient au canal en passant à travers les espaces ménagés entre les surfaces réfléchissantes de ladite première pluralité de surfaces réfléchissantes.

Selon un exemple de réalisation, les surfaces réfléchissantes de la première pluralité de surfaces réfléchissantes s'étendent principalement selon un plan (xy) et sont espacées les unes des autres dans ce plan pour ménager entre elles des ouvertures. Le détecteur est configuré de sorte de sorte qu'une partie au moins du rayonnement incident, c'est-à-dire le rayonnement incident au niveau ou sur le détecteur, ou plus précisément arrivant sur le plan contenant la première pluralité de surfaces réfléchissantes, pénètre dans le canal en passant par lesdites ouvertures. Ainsi, ce rayonnement ne traverse pas de surface réfléchissante de ladite première pluralité.

La présence des ouvertures permet d'augmenter le nombre de rayons lumineux parvenant dans le canal. Cela permet de résoudre la problématique consistant à améliorer la sensibilité du détecteur et la précision de l'analyse des particules.

Par ailleurs, les rayons lumineux passant par les ouvertures pénètrent dans le canal quel que soit leur angle d'incidence. Cela permet de résoudre la problématique consistant à relâcher les contraintes sur la source lumineuse et la configuration du détecteur ainsi que sur les matériaux utilisés pour former les surfaces réfléchissantes.

- Selon un exemple de réalisation, le détecteur est configuré de sorte qu'une partie au moins des rayons lumineux diffusés peuvent passer du canal à la matrice de photodétecteurs sans traverser aucune surface réfléchissante. Cela permet de résoudre la problématique consistant à améliorer la sensibilité du détecteur et la précision de l'analyse des particules. Cela permet de résoudre la problématique consistant à relâcher les contraintes sur la source lumineuse et la configuration du détecteur.

- Selon un exemple de réalisation, le détecteur est configuré de sorte qu'une partie au moins des rayons lumineux incidents peuvent parvenir au canal sans traverser aucune surface réfléchissante. Cela permet de résoudre la problématique consistant à améliorer la sensibilité du détecteur et la précision de l'analyse des particules. Cela permet de résoudre la problématique consistant à relâcher les contraintes sur la source lumineuse et la configuration du détecteur ainsi que sur les matériaux utilisés pour former les surfaces réfléchissantes.

- Avantageusement, la première pluralité de surfaces réfléchissantes présente une première distribution en damier dans un premier plan et la deuxième pluralité de surfaces réfléchissantes présente une deuxième distribution en damier dans un deuxième plan parallèle audit premier plan, la première distribution en damier et la deuxième distribution en damier étant complémentaires selon une direction perpendiculaire (z) audits premier et deuxième plans.

Ainsi les zones occupées par le damier de la première pluralité de surfaces réfléchissantes ne sont pas disposées au droit, selon la direction perpendiculaire (z), des zones occupées par le damier de la deuxième pluralité de surfaces réfléchissantes.

Les zones occupées par le damier de la première pluralité de surfaces réfléchissantes sont disposées au droit des zones non occupées par le damier de la deuxième pluralité de surfaces réfléchissantes.

Cela permet de former une cavité optique présentant au moins une ouverture optique configurée pour laisser passer le signal lumineux issu de la pompe.

- La première pluralité de surfaces réfléchissantes présente une première distribution en bandes dans un premier plan et la deuxième pluralité de surfaces réfléchissantes présente une deuxième distribution en bandes dans un deuxième plan parallèle au premier plan, la première distribution en bandes et la deuxième distribution en bandes étant complémentaires selon une direction perpendiculaire (z) audits premier et deuxième plans. Ainsi les photodétecteurs masqués par les bandes de l'une des pluralités de surfaces réfléchissantes ne sont pas masquées par les autres bandes de l'autre pluralité de surfaces réfléchissantes.

De préférence tous les photodétecteurs sont masqués de la lumière incidente par l'une ou l'autre des pluralités de surfaces réfléchissantes.

- Selon un mode de réalisation particulier, certains photodétecteurs ne sont ni situés au droit d'une surface réfléchissante de la première pluralité de surfaces réfléchissantes, ni situés au droit d'une surface réfléchissante de la deuxième pluralité de surfaces réfléchissantes.

Dans ce cas, ils peuvent être aveuglés par le flux incident. Pour supprimer cet inconvénient il est possible lors du traitement subséquent de ne pas prendre en compte le signal délivré par ces photodétecteurs aveuglés.

- Selon un mode de réalisation avantageux, le détecteur selon la présente invention comprend au moins un miroir de Bragg supérieur, de préférence s'étendant selon un plan parallèle à un plan principal (x, y), et disposé entre la première pluralité de surfaces réfléchissantes et le canal.

Cela permet de former une cavité optique résonante dite de Fabry-Pérot afin d'amplifier le rayonnement lumineux incident appelé pompe et ainsi d'amplifier par voie de conséquence le flux lumineux, issu des rayons lumineux diffusés, reçu au niveau de la matrice de photodétecteurs.

- Selon un autre mode de réalisation, le détecteur selon la présente invention comprend au moins un miroir de Bragg supérieur, de préférence s'étendant selon un plan parallèle à un plan principal (x, y), et disposé entre l'entrée optique et la première pluralité de surfaces réfléchissantes.
- Selon un mode de réalisation avantageux, la deuxième pluralité de surfaces réfléchissantes comprend une pluralité de miroirs de Bragg inférieurs, chaque miroir de Bragg inférieur étant situé de préférence au droit de l'entrée optique.
- Avantageusement, chaque miroir de Bragg inférieur est espacé de chaque autre miroir de Bragg inférieur de la pluralité de miroirs de Bragg inférieurs, de sorte à former au moins une ouverture optique entre eux.
- Avantageusement, chaque miroir de Bragg supérieur est espacé de chaque autre miroir de Bragg supérieur de la pluralité de miroirs de Bragg supérieur, de sorte à former au moins une ouverture optique entre eux.

- Avantageusement, l'épaisseur du miroir de Bragg supérieur est inférieure à l'épaisseur de la pluralité de miroirs de Bragg inférieurs, les épaisseurs étant mesurées selon la direction perpendiculaire (z).
- Avantageusement, le coefficient de réflectivité du miroir de Bragg supérieur est inférieur au coefficient de réflectivité de la pluralité de miroirs de Bragg inférieurs relativement auxdits rayons lumineux diffusés.
- Avantageusement, le miroir de Bragg supérieur présente une première période et la pluralité de miroirs de Bragg inférieurs présente une deuxième période, la première période étant égale à la deuxième période.
- Avantageusement, le miroir de Bragg supérieur présente un premier nombre de périodes et la pluralité de miroirs de Bragg inférieurs présente un deuxième nombre de périodes, le premier nombre de périodes étant inférieur au deuxième nombre de périodes.
- Avantageusement, le canal est délimité, de préférence dans le plan (z, x), en partie au moins par un premier substrat et un deuxième substrat, le premier substrat comportant au moins la première pluralité de surfaces réfléchissantes, le deuxième substrat comportant au moins la deuxième pluralité de surfaces réfléchissantes.
- Selon un mode de réalisation avantageux, le détecteur de la présente invention forme un empilement de couches, ledit empilement comprenant au moins un premier substrat, un deuxième substrat et un troisième substrat, le premier substrat comportant au moins la première pluralité de surfaces réfléchissantes, le deuxième substrat comportant au moins la deuxième pluralité de surfaces réfléchissantes et de préférence une partie du canal et le troisième substrat comportant au moins la matrice de photodétecteurs, le canal étant délimité, de préférence dans le plan (z, x), en partie au moins par le premier et le deuxième substrats.

La présente invention trouve pour domaine préférentiel d'application la détection de particules de diverses tailles, de préférence dans le domaine des particules microscopiques voire nanométriques.

Par exemple la présente invention peut servir à la détection de particules issues de fumées, de particules polluantes, de particules de poussières, de particules d'allergènes telles que les pollens, les spores de moisissures, ou encore de particules cancérigènes, ou des particules biologiques telles que des bactéries, des virus, ou encore des exosomes.

La présente invention s'applique à tout type de particules véhiculées par un fluide, que celui-ci soit liquide et/ou gazeux.

La présente invention sera décrite ci-dessous en référence à trois modes de réalisation non limitatifs pouvant être combinés au besoin et disposant chacun d'une pluralité de variantes.

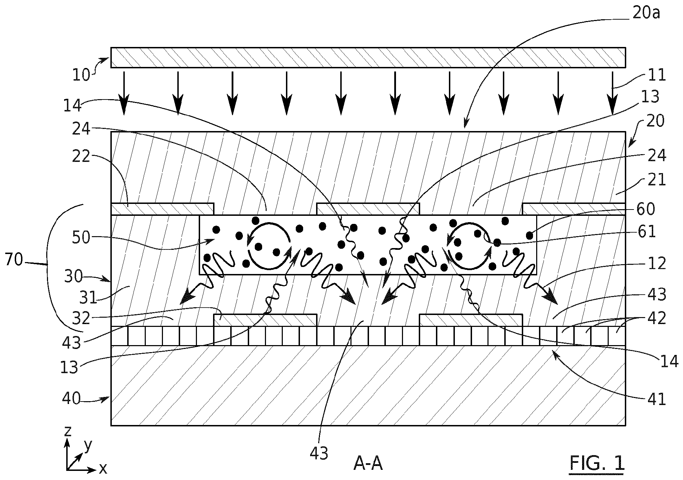

Un premier mode de réalisation de l'invention va maintenant être décrit en référence à la figure 1 qui représente une vue en coupe d'un empilement comprenant un premier substrat 20, un deuxième substrat 30 et un troisième substrat 40.

Le premier substrat 20, le deuxième substrat 30 et le troisième substrat 40 s'étendent chacun principalement selon des plans parallèles à un plan principal (x, y).

De manière avantageuse, le premier substrat 20 et le deuxième substrat 30 définissent un canal 50 destiné à recevoir un fluide véhiculant des particules 60.

Selon un mode de réalisation le canal 50 s'étend selon une direction principale (y) contenue dans le plan principal (x, y) par exemple. On peut prévoir de mettre en mouvement le fluide. Ce dernier, ainsi que les particules 60 se déplacent ainsi principalement selon ladite direction principale.

Afin de réaliser la détection des particules 60 présentes dans le canal 50, on prévoit un dispositif optique 10 configuré pour émettre un rayonnement lumineux incident 11 et une matrice 41 de photodétecteurs 42 disposés de part et d'autre d'une partie au moins du canal 50.

Selon le mode de réalisation non limitatif illustré en figure 1, le rayonnement lumineux incident 11 se propage selon une direction perpendiculaire (z) au plan principal (x, y). Sur cette figure la matrice 41 de photodétecteurs 42 est portée par le troisième substrat 40. Ainsi le dispositif optique 10 et la matrice 41 de photodétecteurs 42 sont disposés de part et d'autre des premier 20 et deuxième 30 substrats.

Le premier substrat 20 comprend au moins une entrée optique 20a définie par exemple par une face du premier substrat 20 située en regard du dispositif optique 10 de sorte que le rayonnement lumineux incident 11 émis depuis le dispositif optique 10 pénètre dans le premier substrat via l'entrée optique 20a.

De manière avantageuse, le premier substrat 20 comprend un premier milieu transparent 21 comprenant au moins un matériau transparent relativement au rayonnement lumineux incident 11.

De sorte à générer le rayonnement lumineux incident 11, le dispositif optique 10 peut par exemple comprendre une matrice de diodes électroluminescentes, une source lumineuse ponctuelle ou encore une source laser.

Le premier substrat 20 comprend au niveau d'une face opposée à l'entrée optique 20a au moins une première pluralité de surfaces réfléchissantes 22. Ces surfaces réfléchissantes comprennent avantageusement au moins un matériau réfléchissant relativement au rayonnement lumineux incident 11.

Ces surfaces réfléchissantes 22 définissent entre elles des passages optiques 24 également désignées espaces, permettant aux rayons lumineux de passer sans traverser lesdites surfaces réfléchissantes 22. Ces passages optiques 24 dépourvus de surfaces réfléchissantes 22 s'étendent de préférence dans un plan (x, y), et de préférence dans le même plan (x, y) que les surfaces réfléchissantes 22. Ainsi, le rayonnement incident 11, c'est-à-dire le rayonnement parvenant au détecteur ou parvenant au plan (x, y) contenant la première pluralité de surfaces réfléchissantes, peut pénétrer dans le canal 50 sans traverser aucune surface réfléchissante.

La présence des ouvertures optiques 24 permet d'augmenter le nombre de rayons lumineux parvenant dans le canal 50. Par conséquent, le détecteur selon l'invention permet d'améliorer la sensibilité du détecteur et la précision de l'analyse des particules.

Par ailleurs, le rayonnement lumineux incident passant par les ouvertures 24 pénètre dans le canal 50 quel que soit son angle d'incidence. Par conséquent, le détecteur selon l'invention permet de relâcher les contraintes sur la source lumineuse et la configuration du détecteur ainsi que sur les matériaux utilisés pour former les surfaces réfléchissantes. Par exemple, on pourra prévoir que celle-ci soit en métal.

Le deuxième substrat 30 comprend, de préférence, une première face définissant une partie du canal 50 et une deuxième face opposée à la première face. La deuxième pluralité de surfaces réfléchissante 32 est située au niveau de cette deuxième face.

Comme pour la première pluralité de surfaces réfléchissantes 22, la deuxième pluralité de surfaces réfléchissantes 32 comprend avantageusement au moins un matériau réfléchissant relativement au rayonnement lumineux incident 11. Les surfaces réfléchissantes 32 s'étendent dans un plan (x, y) et présentent entre elles des passages optiques 43 également désignés espaces 43, permettant aux rayons lumineux de passer sans traverser lesdites surfaces réfléchissantes 32. Ces passages optiques 43 dépourvus de surfaces réfléchissantes 32 s'étendent de préférence dans le même plan (x, y) que les surfaces réfléchissantes 32. Ainsi, le rayonnement diffusé 12 parvenant sur la matrice de photodétecteurs depuis le canal 50, ne traverse aucune surface réfléchissante.

La présence des passages optiques 43 permet d'augmenter le nombre de rayons lumineux parvenant dans le canal 50. Par conséquent, le détecteur selon l'invention permet d'améliorer la sensibilité du détecteur et la précision de l'analyse des particules.

Par ailleurs, les rayons lumineux diffusés passant par les passages optiques 43 parviennent depuis le canal 50 et jusqu'à la matrice de photodétecteurs quel que soient leurs angles d'incidence. Par conséquent, le détecteur selon l'invention permet de relâcher les contraintes sur la configuration du détecteur ainsi que sur les matériaux utilisés pour former les surfaces réfléchissantes. Par exemple, on pourra prévoir que celle-ci soit en métal.

Le deuxième substrat 20 comprend avantageusement un deuxième milieu transparent 31 comprenant au moins un matériau transparent relativement au rayonnement lumineux incident 11, aux rayons lumineux diffusés 12, aux rayons lumineux diffusés et réfléchis une première fois 13, et aux rayons lumineux diffusés et réfléchis plusieurs fois 14.

Le troisième substrat 40 comprend au niveau d'une première face la matrice 41 de photodétecteurs 42. Ces photodétecteurs 42 sont avantageusement configurés pour détecter au moins un rayonnement lumineux dont la longueur d'onde est sensiblement égale à la longueur d'onde du rayonnement lumineux incident 11. Cette matrice 41 de photodétecteurs 42 est configurée pour détecter les rayons lumineux diffusés 12, diffusés et réfléchis une première fois 13 et diffusés et réfléchis plusieurs fois 14.

Cette matrice 41 de photodétecteurs 42 est disposée en regard de la deuxième pluralité de surfaces réfléchissantes 32 et de la première pluralité de surfaces réfléchissantes 22.

Ainsi, selon ce premier mode de réalisation, le dispositif optique 10 et le troisième substrat 40 portant la matrice 41 de photodétecteurs 42 sont situés de part et d'autre des premiers 20 et deuxième 30 substrats.

De manière particulièrement avantageuse, les première 22 et deuxième 32 pluralités de surfaces réfléchissantes sont disposées de part et d'autre du canal 50.

De préférence, les première 22 et deuxième 32 pluralités de surfaces réfléchissantes sont disposées en quinconce selon la direction perpendiculaire (z).

Selon un mode de réalisation préféré, la première pluralité de surfaces réfléchissantes 22 et la deuxième pluralité de surfaces réfléchissantes 32 sont disposées de manière complémentaire selon la direction perpendiculaire (z). Cette disposition complémentaire correspond à une disposition de la première pluralité de surfaces réfléchissantes 22 relativement à la deuxième pluralité de surfaces réfléchissantes 32 de sorte que les photodétecteurs 42 de la matrice 41 ne reçoivent pas directement le rayonnement lumineux incident 11.

Selon cette disposition, seuls des rayons lumineux diffusés 12, diffusés et réfléchis une première fois 13 et diffusés et réfléchis plusieurs fois 14 peuvent atteindre la matrice 41 de photodétecteurs 42.

Afin d'atteindre cette complémentarité selon la direction perpendiculaire (z), les première 22 et deuxième 32 pluralités de surfaces réfléchissantes peuvent comprendre chacune une disposition spatiale particulière de leur surfaces réfléchissantes. Par exemple, cette disposition spatiale peut prendre la forme d'un damier ou de bandes s'étendant selon une même direction et présentant une répartition dans le plan principal (x, y) périodique.

Selon un mode de réalisation, la première pluralité de surface réfléchissantes 22 peut représenter une surface supérieure ou bien inférieure à la deuxième pluralité de surfaces réfléchissantes 32, de préférence tout en conservant une complémentarité selon la direction perpendiculaire (z).

Selon un autre mode de réalisation, la première pluralité de surfaces réfléchissantes 22 comprend ou est composée d'au moins un anneau et la deuxième pluralité de surfaces réfléchissantes 32 comprend ou est composée d'au moins un disque de diamètre égal ou supérieur, de préférence pas de plus de 10%, au diamètre intérieur dudit au moins un anneau, les centres de l'anneau du disque étant disposés sur une même droite parallèle à l'axe z.

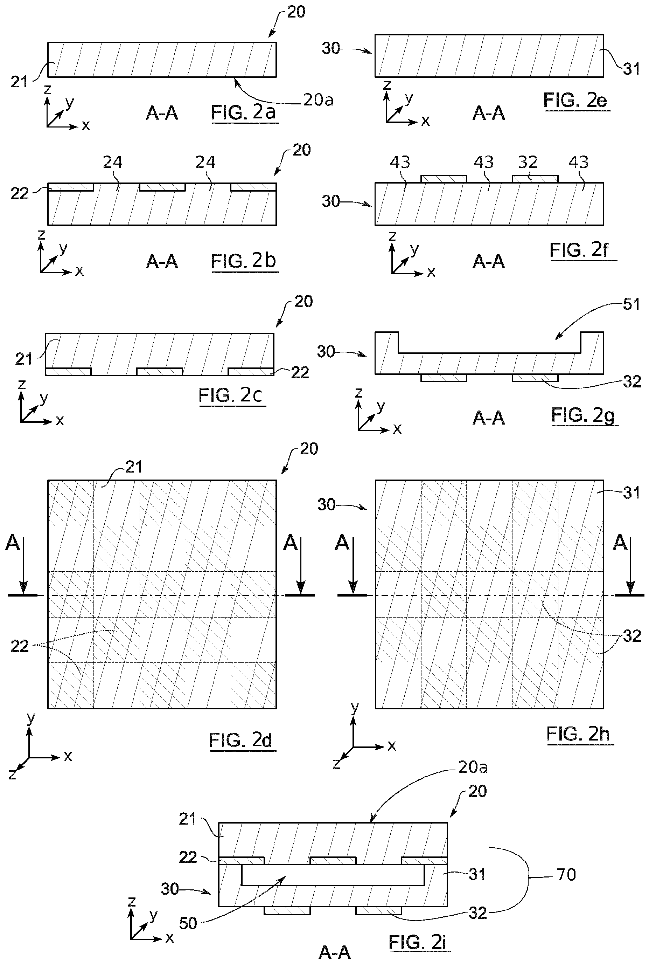

Les dispositions spatiales dans le plan principal (x, y) de la première 22 et de la deuxième 32 pluralités de surfaces réfléchissantes présentent chacune une fréquence en opposition de phase l'une relativement à l'autre de sorte à atteindre cette complémentarité. Un exemple de complémentarité en forme de damier est illustré en figures 2d et 2h.

Cette complémentarité permet de former une cavité optique 70. En effet, cette cavité optique 70 est délimitée par les première 22 et deuxième 32 pluralités de surfaces réfléchissantes. Ainsi, la cavité 70 comprend par exemple la portion de canal 50 ainsi que les portions de substrat 20, 30 situés entre les première 22 et deuxième 32 pluralités de surfaces réfléchissantes. Selon un mode de réalisation, la première 22 et la deuxième 32 pluralités de surfaces réfléchissantes sont disposées en quinconce. Ainsi, les zones occupées par les surfaces réfléchissantes de la première pluralité 22 de surfaces réfléchissantes ne sont pas situées au droit, typiquement selon la direction perpendiculaire (z), des zones occupées par les surfaces réfléchissantes de la deuxième pluralité 32 de surfaces réfléchissantes et inversement.

Selon un mode de réalisation, les photodétecteurs 42 sont tous disposés au droit d'au moins une surface réfléchissante prise parmi la première 22 et la deuxième 32 pluralités de surfaces réfléchissantes. Ainsi, tous les photodétecteurs sont masqués par une surface réfléchissante. Ils ne reçoivent pas de lumière incidente provenant de l'entrée optique 20a qui n'aurait ni été diffusée, ni réfléchie. Ce mode de réalisation est illustré par la figure 1.

Selon un autre mode de réalisation, certaines des zones occupées par les surfaces réfléchissantes de la première pluralité de surfaces réfléchissantes 22 sont situées en partie au moins au droit de certaines zones occupées par les surfaces réfléchissantes de la deuxième pluralité de surfaces réfléchissantes 32. Il peut ainsi y avoir recouvrement partiel des zones occupées par les surfaces réfléchissantes.

Selon un mode de réalisation, les première 22 et deuxième 32 pluralités de surfaces réfléchissantes présentent selon la direction perpendiculaire (z) un recouvrement inférieur à 50% de leur surface, de préférence inférieur à 25% et avantageusement elles ne présentent pas de recouvrement selon la direction perpendiculaire (z).

Selon un autre mode de réalisation, certains photodétecteurs 42 ne sont disposés au droit d'aucune surface réfléchissante. Ils peuvent alors recevoir de la lumière incidente. Dans ce cas, on prévoit alors de retraiter l'information acquise par ces capteurs, par exemple en éliminant le signal qu'ils reçoivent. Selon ce mode de réalisation, ces photodétecteurs 42 peuvent permettre par ailleurs de mesurer l'ordre de grandeur de la puissance de la pompe et par exemple le comparer aux signaux diffusés.

Afin de présenter de manière simple le mode de réalisation dans lequel les surfaces réfléchissantes ne se recouvrent pas entre elles et couvrent tous les photodétecteurs 42 situés au droit de l'entrée optique 20a, nous allons à présent décrire le chemin optique d'un rayonnement lumineux incident 11.

Le rayonnement lumineux incident 11 une fois émis depuis le dispositif optique 10 selon la direction perpendiculaire (z) pénètre dans le premier substrat 20 au niveau de l'entrée optique 20a.

Le rayonnement lumineux incident 11 traverse alors le premier milieu transparent 21 du premier substrat 20, passe par au moins un passage optique 24 délimité par les surfaces réfléchissantes 22 et atteint le canal 50. Une fois dans le canal 50, le rayonnement lumineux incident 11 rencontre au moins une particule 60 avant et/ou après avoir été réfléchi une ou plusieurs fois par la première pluralité de surfaces réfléchissantes 22 et/ou la deuxième pluralité de surfaces réfléchissantes 32.

De manière avantageuse, l'interaction entre le rayonnement lumineux incident 11, réfléchi ou non, avec au moins une particule 60 génère au moins un rayon lumineux diffusé 12.

Ce rayon lumineux diffusé 12 peut alors parvenir à la matrice 41 de photodétecteurs 42 via le deuxième milieu transparent 31 directement ou après une ou plusieurs réflexions sur la première pluralité de surfaces réfléchissantes 22 et/ou la deuxième pluralité de surfaces réfléchissantes 32 et en passant par des ouvertures optiques 43 définies par les espaces entre les surfaces réfléchissantes de la deuxième pluralité de surfaces réfléchissantes 32. L'ensemble des rayons diffusés 12, 13 et 14 parvenant à la matrice 41 de photodétecteurs 42 permet alors de former un diagramme de diffraction, avantageusement bidimensionnel.

L'Homme du métier est alors en mesure de déduire des informations relatives à ces particules 60 sur la base du diagramme de diffraction obtenu grâce à la matrice 41 de photodétecteurs 42.

A cet effet, l'homme du métier pourra par exemple se référer aux articles suivants : "The Mie Theory: Basics and Applications"; Wolfram Hergert, Thomas Wriedt; Springer, 30 juin 2012 - 259 pages ou "Light scattering and surface plasmons on small spherical particles", Xiaofeng Fan, Weitao Zheng and David J Singh, Light: Science & Applications (2014) 3 ou encore J. R. Hodkinson and I. Greenleaves, "Computations of Light-Scattering and Extinction by Spheres According to Diffraction and Geometrical Optics, and Some Comparisons with the Mie Theory", Journal of the Optical Society of America 53, 577 (1963).

Selon le mode de réalisation où les photodétecteurs 42 sont au droit d'au moins une surface réfléchissante, en l'absence de particules 60 dans le canal 50, aucun rayon lumineux diffusé n'est généré, dès lors la matrice 41 de photodétecteurs 42 ne détecte de préférence pas de rayonnement lumineux. Ce cas correspond au cas idéal. En effet, il a été observé lors du développement de la présente invention qu'il existe un rayonnement diffusé parasite en l'absence de particules 60 dans le canal 50. Ce rayonnement diffusé parasite a été identifié comme provenant de la diffraction du rayonnement lumineux incident 11 par les imperfections, notamment par la rugosité, des interfaces séparant les différents milieux de propagation du rayonnement lumineux incident 11. Afin de réduire, voire de s'affranchir, de ce rayonnement diffusé parasite, la présente invention utilise une pluralité de techniques de lithographie et de gravure afin de réduire la rugosité de ces interfaces.

Nous allons maintenant décrire, au travers des figures 2a à 2i, un exemple de procédé de réalisation du détecteur de particules illustré en figure 1.

De manière simplifiée, ce procédé comprend au moins les étapes suivantes :

- fournir un premier substrat 20 s'étendant selon le plan principal (x, y) et comprenant un premier milieu transparent 21 relativement au rayonnement lumineux incident 11, ce premier substrat 20 comprenant une première surface destinée à servir d'entrée optique 20a ;
- former une première pluralité de surfaces réfléchissantes 22 sur une deuxième surface du substrat 20 opposée à la première surface ;
- fournir un deuxième substrat 30 s'étendant aussi selon le plan principal (x, y) et comprenant un deuxième milieu transparent 31 relativement au rayonnement lumineux incident 11, ce deuxième substrat 30 comprenant une première surface destiné à former au moins une partie de canal 50 et comprenant sur une deuxième surface du substrat 30 une deuxième pluralité de surfaces réfléchissantes 32 ;
- assembler le premier substrat 20 et le deuxième substrat 30 de sorte que l'entrée optique 20a et la deuxième pluralité de surfaces réfléchissantes 32 soient situées de part et d'autre de la première pluralité de surfaces réfléchissantes 22 et du canal 50 défini par la coopération du premier substrat 20 et du deuxième substrat 30 formant le canal 50 de circulation des particules 60.

Ces étapes sont détaillées ci-dessous.

La figure 2a illustre le premier substrat 20 comprenant avantageusement un premier milieu transparent 21. De préférence, ce premier substrat 20 comprend de l'oxyde de silicium et avantageusement du verre. La première surface de ce premier substrat 20 est destinée à former l'entrée optique 20a, il s'agit d'une interface, de préférence plane, entre le premier milieu transparent 21 et l'environnement extérieur. Cette surface est de préférence destinée à être tournée en regard du dispositif optique 10.

La figure 2b représente la formation de la première pluralité de surfaces réfléchissantes 22 s'étendant selon le plan principal (x, y) sur une surface opposée à l'entrée optique 20a. La formation de la première pluralité de surfaces réfléchissantes 22 comprend une étape de dépôt d'une couche, de préférence métallique, en aluminium par exemple, suivie d'une étape de structuration par gravure de cette couche métallique de sorte à former la première pluralité de surface réfléchissantes 22. Cette étape de structuration consiste principalement à former un damier par exemple ou bien une série de bandes parallèles entre elles. Cette étape de structuration comprend donc la définition d'un premier réseau périodique de surfaces réfléchissantes distribuées dans le plan principal (x, y).

Cette structuration est ensuite suivie d'une étape de dépôt d'un oxyde, de silicium par exemple, afin de combler les espaces entre chaque surface réfléchissante 22. Cette étape permet la mise à niveau de cette face du premier substrat 20. Les espaces entre chaque surface réfléchissante 22 forment des passages optiques 24.

Avantageusement, on effectue des étapes pour améliorer la qualité de cette surface en réduisant au minimum sa rugosité.

De manière préférentielle, une étape de planarisation par polissage mécanico-chimique par exemple est réalisée. Cette planarisation permet de réduire la rugosité de surface de sorte que les interfaces entre le premier substrat 20 et l'environnement soient les plus abruptes possibles de sorte à réduire le phénomène de diffraction parasite aux interfaces lorsque le rayonnement lumineux incident 11 traverse ces interfaces.

La figure 2c illustre le retournement du premier substrat 20 selon la direction (x).

La figure 2d illustre une vue du dessus du premier substrat 20. Sur cet exemple, la première pluralité de surfaces réfléchissantes 22 a été structurée de sorte à former un premier damier. Ce premier damier est donc composé de surfaces réfléchissantes 22 et d'ouvertures optiques 24.

La figure 2e illustre le deuxième substrat 30 s'étendant également selon le plan principal (x, y) et comprenant avantageusement un deuxième milieu transparent 31. De préférence, ce deuxième substrat 30 comprend également de l'oxyde de silicium et avantageusement du verre. Une première surface de ce deuxième substrat est destinée à former une partie au moins du canal 50.

La figure 2f représente la formation de la deuxième pluralité de surfaces réfléchissantes 32 sur une deuxième surface du deuxième substrat 30 opposée à la première surface. La formation de la deuxième pluralité de surfaces réfléchissantes 32 comprend une étape de dépôt d'une couche de préférence métallique, en aluminium par exemple, suivie d'une étape de structuration par gravure de cette couche métallique de sorte à former la deuxième pluralité de surfaces réfléchissantes 32.

Comme pour la structuration de la première pluralité de surfaces réfléchissantes 22, cette étape de structuration consiste principalement à former un damier ou bien une série de bandes parallèles entre elles, alternant des surfaces réfléchissantes 32 et des ouvertures optiques 43. Cette étape de structuration comprend donc la définition d'un deuxième réseau périodique de surfaces réfléchissantes s'étendant selon le plan principal (x, y).

De manière avantageuse et identique au cas de la première pluralité de surfaces réfléchissantes 22, cette structuration peut être ensuite suivie d'une étape de dépôt, d'un oxyde de silicium par exemple, afin de combler les espaces entre chaque surface réfléchissante 32. Par souci de concision, cette étape optionnelle n'est pas illustrée, ni l'étape optionnelle de planarisation par polissage mécanico-chimique apportant les mêmes avantages que ceux précédemment décrits. Les espaces entre chaque surface réfléchissante 32 forment des ouvertures optiques 43.

La figure 2g illustre le retournement du deuxième substrat 30 selon la direction (x), ainsi que la formation d'une partie 51 du canal 50. Cette formation peut avantageusement être réalisée par gravure au travers d'un masque dur ou d'un masque de résine.

La figure 2h illustre une vue du dessus du deuxième substrat 30. Sur cet exemple, la deuxième pluralité de surfaces réfléchissantes 32 a été structurée de sorte à former un deuxième damier.

Avantageusement, le premier damier et le deuxième damier sont complémentaires selon la direction perpendiculaire (z). Cette complémentarité spatiale se traduit par une opposition de phase du premier réseau périodique relativement au deuxième réseau périodique. Les figures 2d et 2h illustrent cette complémentarité.

Selon un mode de réalisation, le premier réseau périodique et le deuxième réseau périodique peuvent être circulaires, concentriques, former une spirale ou encore toutes autres formes géométriques, présentant une complémentarité selon la direction perpendiculaire (z).

La figure 2i illustre l'assemblage, par collage moléculaire par exemple, du premier substrat 20 avec le deuxième substrat 30.

De manière particulièrement avantageuse, cet assemblage est réalisé de sorte que le premier substrat 20 définisse avec la partie 51 du canal 50 portée par le deuxième substrat 30, le canal 50 de circulation des particules 60. Dans cet exemple, ce canal 50 présente un pourtour fermé dans le plan (z, x). Il s'étend principalement selon la direction y.

La disposition d'une matrice 41 de photodétecteurs 42 en regard de la deuxième pluralité de surfaces réfléchissantes 32 et d'un dispositif optique 10 en regard de l'entrée optique 20a permet de former le détecteur de particules 60 selon ce premier mode réalisation de la présente invention.

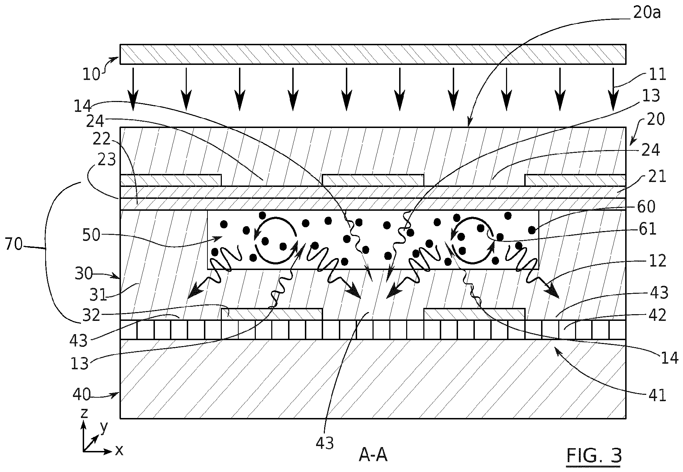

Un deuxième mode de réalisation de l'invention va maintenant être décrit en référence à la figure 3. Ce mode de réalisation présente notamment l'avantage d'amplifier le signal mesuré par la matrice 41 de photodétecteurs 42 via l'utilisation d'un miroir de Bragg.

De manière identique à la figure 1 précédente, la figure 3 représente une vue en coupe d'un empilement comprenant un premier substrat 20, un deuxième substrat 30 et un troisième substrat 40, s'étendant tous selon des plans parallèles au plan principal (x, y).

Ce deuxième mode de réalisation se distingue du premier mode précédemment décrit, par la présence d'au moins un miroir de Bragg supérieur 23 situé de préférence entre le canal 50 et la première pluralité de surfaces réfléchissantes 22.

De manière préférentielle mais non limitative, le miroir de Bragg supérieur 23 recouvre la totalité de la première pluralité de surfaces réfléchissantes 22.

Selon un autre mode de réalisation, le miroir de Bragg supérieur 23 est situé entre l'entrée optique 20a et la première pluralité de surfaces réfléchissantes 22.

Ainsi, l'utilisation d'un miroir de Bragg supérieur 23 permet de réaliser une cavité optique 70, de préférence résonante, contenant une partie au moins du canal 50. Cette cavité optique 70 est délimitée par la première pluralité de surfaces réfléchissantes 22, de préférence par le miroir de Bragg supérieur 23, et par la deuxième pluralité de surfaces réfléchissantes 32.

Cette cavité optique 70 permet d'amplifier le rayonnement lumineux incident 11 au niveau du canal 50. En effet, cette cavité optique 70 est assimilable à une cavité Fabry-Pérot. Dans la suite de la description, nous utiliserons le terme de « signal de pompe » pour décrire le rayonnement lumineux incident 11 lorsque celui-ci se trouve dans la cavité optique 70. Ce terme est emprunté au domaine de l'optique laser et des cavités optiques de type Fabry-Pérot.

En termes couramment utilisés dans ce domaine particulier de l'optique, la présence d'un miroir de Bragg supérieur 23 assure une amplification du signal de pompe. Le signal diffusé, mesuré par les photodétecteurs 42 et correspondant aux rayons diffusés 12, 13 et 14, est proportionnel à ce signal de pompe. De ce fait, le miroir de Bragg supérieur 23 permet une amplification du signal diffusé et donc de la sensibilité du détecteur de particules selon la présente invention.

Cette amplification conduit alors à une meilleure mesure du diagramme de diffraction et donc à une analyse plus qualitative des particules 60 présentes dans le canal 50.

Dans cette configuration, cela revient à accroître artificiellement la distance parcourue par les rayons lumineux se trouvant à l'intérieur de la cavité optique 70 et ainsi à multiplier le nombre d'interactions avec les particules 60.

En effet, lorsqu'il y a un seul passage des rayons lumineux dans la cavité optique 70, toutes les particules 60 diffusent, mais faiblement. Si les rayons lumineux repassent N fois dans la cavité optique 70, toutes les particules diffuseront environ N fois plus (à l'atténuation près de la pompe après chaque passage).

De manière avantageuse, dans le cas d'un ou de plusieurs passages des rayons lumineux dans la cavité optique 70, toutes ou presque toutes les particules 60, présentes dans la cavité optique 70, participent au phénomène de diffusion.

De manière particulièrement astucieuse, le miroir de Bragg supérieur 23 est avantageusement configuré de sorte à réaliser un couplage critique qui maximise l'absorption du rayon lumineux incident 11 par la cavité optique 70 par la maximisation de la diffraction dans le canal 50 par les particules 60.

On entend par « couplage critique » une relation entre concentration des particules, type de particules et réflectivité du miroir de Bragg qui permette de stocker et amplifier la lumière dans la cavité optique 70 suffisamment efficacement pour qu'elle finisse par être entièrement diffusée. L'influence de la réflectivité du miroir de Bragg peut être illustrée de la manière suivante : dans le cas d'une cavité optique dite trop résonante, c'est-à-dire lorsque le miroir de Bragg supérieur 23 est très épais, donc très réfléchissant, peu de lumière rentre par unité de temps dans la cavité optique 70, et si les pertes diffusives sont importantes dans la cavité optique 70, c'est-à-dire s'il y a beaucoup de particules, alors le peu de lumière qui entre n'a pas le temps d'être amplifié. Dans cette situation, il n'y a donc pas d'augmentation de la diffusion, et donc la majorité de la lumière est réfléchie au niveau du miroir de Bragg supérieur 23.

Dans le cas où la cavité optique 70 est dite trop peu résonante, c'est-à-dire lorsque le miroir de Bragg supérieur 23 est fin, la lumière rentre rapidement dans la cavité optique 70, mais elle ressortira également rapidement, avant d'avoir pu être suffisamment amplifiée pour être fortement diffusée.

Ainsi, il existe un régime intermédiaire optimal, dit de « couplage critique », où la réflectivité du miroir du Bragg supérieur 23, c'est-à-dire son épaisseur, est adaptée au nombre de particules dans la cavité optique 70 pour stocker et amplifier la lumière dans la cavité optique 70 suffisamment pour qu'elle finisse par être entièrement diffusée. Ce couplage critique permet ainsi à toute la lumière incidente d'être diffusée par les particules.

Afin de réaliser ce couplage critique, le dimensionnement du miroir de Bragg supérieur 23 pourra être déterminé par l'Homme du métier via divers outils informatiques ou encore au travers de divers ouvrages ou publications scientifiques dont par exemple O. S. Heavens « Optical Properties of Thin Films » Butterworth, London (1955).

Afin de présenter de manière simple ce deuxième mode de réalisation comme nous l'avons fait pour le premier, nous allons décrire le chemin optique du rayonnement lumineux incident 11.

Le rayonnement lumineux incident 11 pénètre dans le premier substrat 20 au niveau de l'entrée optique 20a. Le rayonnement lumineux incident 11 traverse alors le premier milieu transparent 21 et le miroir de Bragg supérieur 23.

Une fois le miroir de Bragg supérieur 23 traversé, le rayonnement lumineux incident 11 suit le même parcours que dans le premier mode de réalisation précédemment décrit, hormis le fait qu'il peut subir, ainsi que les rayons lumineux diffusés 12, 13 et 14, une ou plusieurs réflexions au niveau du miroir de Bragg supérieur 23.

Afin de permettre l'amplification du signal de pompe, le miroir de Bragg supérieur 23 présente une épaisseur, donc une réflectivité optimisée pour maximiser l'amplification du signal de pompe à l'intérieur de la cavité optique 70 qui est résonante relativement au rayonnement lumineux incident 11.

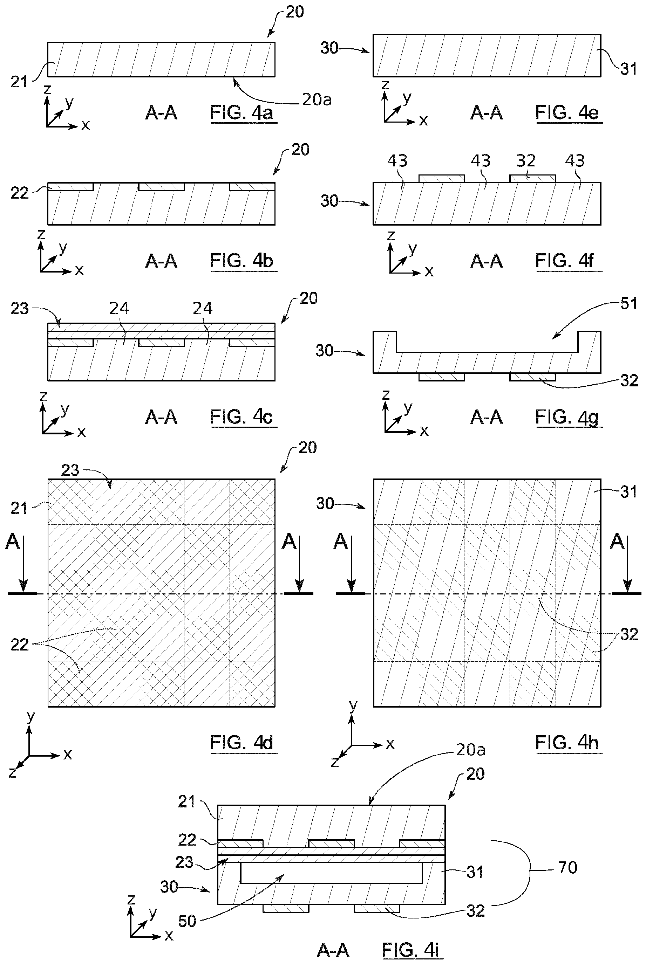

Nous allons maintenant décrire, au travers des figures 4a à 4i, un exemple de procédé de réalisation d'un détecteur de particules selon le mode de réalisation de la figure 3.

Ce procédé comprend les mêmes étapes que celui du premier mode de réalisation, à ceci près qu'il comprend la formation du miroir de Bragg supérieur 23.

De manière simplifiée ce procédé comprend au moins les étapes suivantes :

- fournir un premier substrat 20 comprenant un premier milieu transparent 21 et une entrée optique 20a ;
- former une première pluralité de surfaces réfléchissantes 22 ;
- former un miroir de Bragg supérieur 23 au-dessus de la première pluralité de surfaces réfléchissantes 23 ;
- fournir un deuxième substrat 30 identique à celui du premier mode de réalisation et le structurer de manière identique afin de former la deuxième pluralité de surfaces réfléchissantes 32 et une partie du canal 50.
- assembler le premier substrat 20 et le deuxième substrat 30 de sorte à que l'entrée optique 20a et la deuxième pluralité de surfaces réfléchissantes soient situées de part et d'autre de la première pluralité de surfaces réfléchissantes 22, du miroir de Bragg supérieur 23 et forment le canal 50.

Ces étapes sont détaillées ci-dessous.

Les figures 4a et 4b représentent les mêmes étapes que les figures 2a et 2b du premier mode de réalisation.

La figure 4c illustre la formation du miroir de Bragg supérieur 23 s'étendant selon le plan principal (x, y). Cette étape de formation comprend au moins le dépôt d'une structure multicouches comprenant une alternance d'au moins deux matériaux.

Avantageusement, les matériaux sont sélectionnés en fonction de leur indice de réfraction relativement à la longueur d'onde du rayonnement lumineux incident 11. Ainsi, par exemple, dans le cas d'un rayonnement lumineux incident 11 dans la gamme spectrale du visible, on choisira par exemple une alternance de SiN et de $SiO_2$, ou bien de TiO2 et de $SiO_2$. L'indice de réfraction du SiN est environ de 2, celui du $SiO_2$ est de 1.5, celui du $TiO_2$ est de 2.5 dans le domaine spectral du visible. Dans le domaine spectral du proche infrarouge, on choisira par exemple une alternance de silicium amorphe et de silice.

De manière préférentielle, la formation du miroir de Bragg supérieur 23 comprend un dépôt pleine plaque. En effet, le miroir de Bragg supérieur 23 s'étend de préférence selon le plan principal (x, y) sur l'ensemble de la surface de la première pluralité de surfaces réfléchissantes 22, et potentiellement sur l'ensemble du premier substrat 20 opposé à l'entrée optique 20a.

Selon un mode de réalisation, la formation du miroir de Bragg supérieur 23 comprend la formation d'une pluralité de miroirs de Bragg supérieurs disposée, soit directement au-dessus de la pluralité de surfaces réfléchissante 22, soit entre chacune des surfaces réfléchissantes de la pluralité de surfaces réfléchissantes 22, de manière complémentaire.

La figure 4d illustre une vue du dessus du deuxième substrat 20. De manière particulièrement avantageuse, la première pluralité de surfaces réfléchissantes 22 a été structurée de sorte à former un premier damier et le miroir de Bragg supérieur 23 recouvre la totalité de la première pluralité de surfaces réfléchissantes 22.

Les figures 4e à 4h illustrent les mêmes étapes que celles décrites précédemment par les figures 2e à 2h.

La figure 4i illustre l'assemblage, par collage moléculaire par exemple, du premier substrat 20 avec le deuxième substrat 30.

De manière particulièrement avantageuse, cet assemblage est réalisé de sorte que l'entrée optique 20a et la deuxième pluralité de surfaces réfléchissantes 32 soient situées de part et d'autre du canal 50, de la première pluralité de surfaces réfléchissantes 22 et du miroir de Bragg supérieur 23.

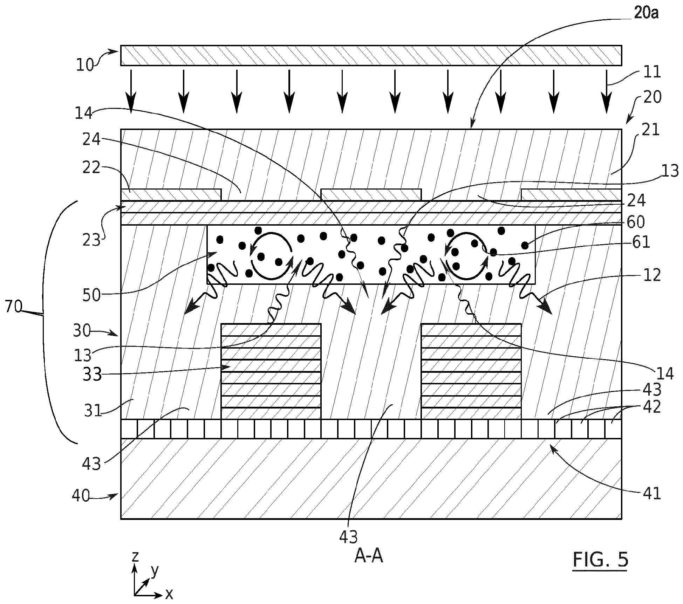

Un troisième mode de réalisation de l'invention va maintenant être décrit en référence à la figure 5. Ce mode de réalisation présente entre autre l'avantage d'amplifier bien plus efficacement le signal diffusé mesuré par la matrice 41 de photodétecteurs 42 que le mode de réalisation précédent et cela via l'utilisation du miroir de Bragg supérieur 23 et d'une pluralité de miroirs de Bragg inférieurs 33.

De manière identique à la figure 3 précédente, la figure 5 représente une vue en coupe d'un empilement comprenant un premier substrat 20, un deuxième substrat 30 et un troisième substrat 40.

Ce troisième mode de réalisation se distingue du précédent par la présence d'une pluralité de miroirs de Bragg inférieurs 33 situés entre le canal 50 et la matrice 41 de photodétecteurs 42. De préférence, ces miroirs de Bragg inférieurs 33 font office de deuxième pluralité de surfaces réfléchissantes 32. En particulier, ces miroirs de Bragg inférieurs 33 s'étendent selon un même plan (x, y) en définissant des passages optiques 43 entre eux, de sorte à ce que les rayons lumineux passent du canal 50 à la matrice 41 de photodétecteurs 42 sans traverser de miroir de Bragg inférieur 33.

Dans ce mode de réalisation, l'utilisation d'une pluralité de miroirs de Bragg inférieurs 33 permet d'accroître les performances de la cavité optique 70 précédente. En effet, à l'inverse des surfaces réfléchissantes métalliques de la deuxième pluralité de surfaces réfléchissantes 32 présentes dans les deux modes de réalisation décrits précédemment, la pluralité de miroirs de Bragg inférieurs 33 présente de très faibles, voire aucune, pertes par absorption. Ainsi, dans ce troisième mode de réalisation, la deuxième pluralité de surfaces réfléchissantes 32 comprend et de préférence est formée par la pluralité de miroirs de Bragg inférieurs 33.

Selon ce troisième mode de réalisation, l'amplification du signal de pompe est alors accrue, il en est donc de même pour le signal diffusé mesuré au niveau de la matrice 41 de photodétecteurs 42.

De plus, durant le développement de la présente invention et la mise au point de ce troisième mode de réalisation, il a été observé de manière surprenante que l'utilisation d'une pluralité de miroirs de Bragg inférieurs 33 présentant une réflectivité supérieure à celle du miroir de Bragg supérieur 23 permet d'atteindre un rapport entre le signal de pompe et le signal diffusé proche de 1. Cela est d'autant plus manifeste lorsque les miroirs de Bragg de la pluralité de miroirs de Bragg inférieur 33 présentent une réflectivité totale, c'est-à-dire sans perte par absorption. Ce rapport entre le signal de pompe et le signal diffusé peut théoriquement être indépendant de la concentration et du type de particules 60, dans ce cas il n'est fonction que des propriétés de la cavité optique 70.

Toutefois, pour une cavité optique donnée, on aura une diffusion dite totale, c'est-à-dire un couplage critique, pour une certaine concentration et un certain type de particules. Mais pour une autre concentration et un type de particules très différent, il faudra une cavité optique différente, c'est-à-dire comprenant un miroir de Bragg supérieur plus fin ou plus épais, pour avoir de nouveau une diffusion totale.

Ainsi, en fonction de l'application visée, et donc du type de particules et des concentrations typiques à détecter, le miroir de Bragg supérieur sera adapté pour être au couplage critique.

Le chemin optique d'un rayonnement lumineux incident 11 émis par le dispositif optique 10 dans le cadre de ce troisième mode de réalisation est identique à celui du mode de réalisation précédent, à ceci près que le rayonnement lumineux incident 11 est réfléchi en partie au moins par le miroir de Bragg supérieur 23 et par la pluralité de miroirs de Bragg inférieur 33. Ces multiples réflexions sont avantageuses afin d'amplifier le signal diffusé mesuré par la matrice 41 de photodétecteurs 42.

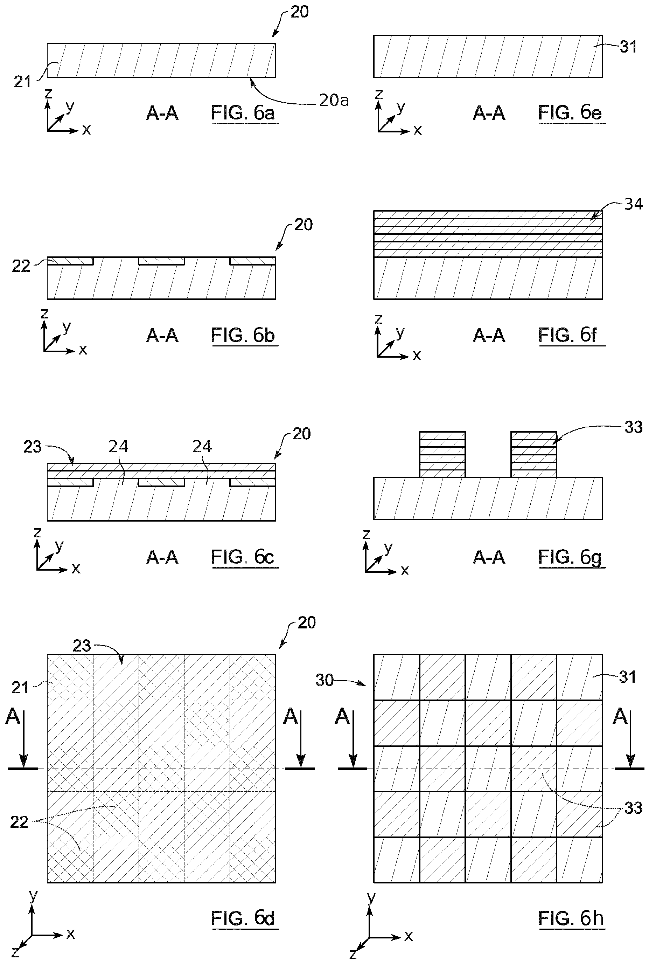

Un exemple de procédé de réalisation d'un détecteur de particules 60 selon ce troisième mode de réalisation va maintenant être décrit au travers des figures 6a à 6l.

Ce procédé comprend les mêmes étapes que celui du deuxième mode de réalisation pour ce qui concerne le premier substrat 20 et sa structuration. Concernant le deuxième substrat 30, sa formation et sa structuration nécessitent de nouvelles étapes relativement au procédé du deuxième mode de réalisation.

De manière simplifiée ces nouvelles étapes sont les suivantes :

- 　fournir un deuxième substrat 30 identique à celui du deuxième mode de réalisation et le structurer de manière à former une pluralité de miroirs de Bragg inférieurs 33 et une partie au moins du canal 50 ;
- 　assembler le premier substrat 20 et le deuxième substrat 30 de sorte à ce que l'entrée optique 20a et la pluralité de miroirs de Bragg inférieurs 33 soient situées de part et d'autre de la première pluralité de surfaces réfléchissantes 22, du miroir de Bragg supérieur 23 et du canal 50.

Ces étapes sont détaillées ci-dessous.

Les figures 6a à 6e représentent les mêmes étapes que les figures 2a à 2e du premier mode de réalisation.

La figure 6f représente la formation d'un miroir de Bragg inférieur pleine plaque 34 sur une face du troisième substrat 30. Cette étape de formation comprend une alternance de dépôts de couches de matériaux destinée à former le miroir de Bragg inférieur pleine plaque 34. De manière particulièrement avantageuse, cette alternance de couches se poursuit jusqu'à atteindre une épaisseur souhaitée relativement aux propriétés optiques attendues. De préférence l'épaisseur de ce miroir de Bragg inférieur pleine plaque 34 est supérieure à l'épaisseur du miroir de Bragg supérieur 23.

La figure 6g illustre une étape de structuration par gravure du miroir de Bragg inférieur pleine plaque 34 de sorte à former la pluralité de miroirs de Bragg inférieurs 33 et/ou les ouvertures optiques 43. Comme pour la structuration de la deuxième pluralité de surfaces réfléchissantes 32 du deuxième mode de réalisation, cette étape de structuration consiste principalement à former un damier ou bien une série de bandes parallèles entre elles. Comme pour le mode de réalisation précédent, cette étape de structuration comprend la définition d'un réseau périodique s'étendant selon le plan principal (x, y).

La figure 6h illustre une vue du dessus du deuxième substrat 30. Sur cet exemple, la pluralité de miroirs de Bragg inférieurs 33 a été structurée de sorte à former un damier composé de miroirs de Bragg inférieurs 33 et de passages optiques 43 dépourvus de miroirs de Bragg inférieurs 33.

Avantageusement, ce damier est complémentaire de celui formé par la première pluralité de surfaces réfléchissantes 23.

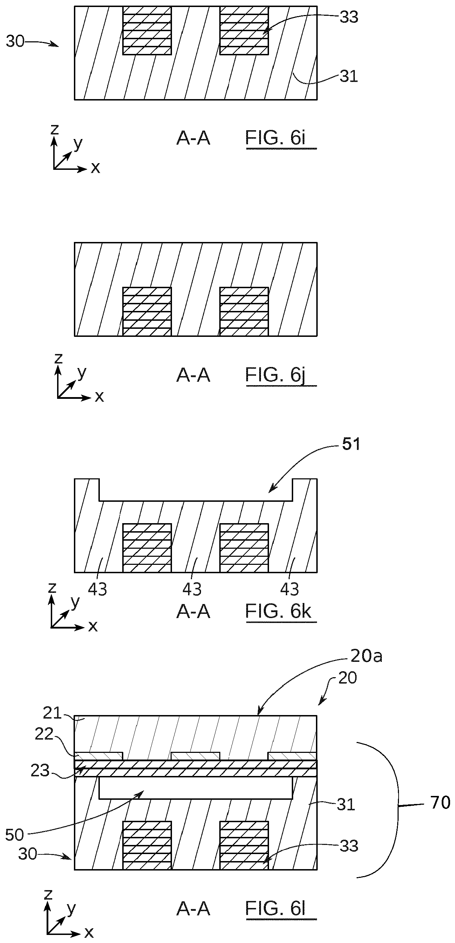

La figure 6i illustre une étape de dépôt d'un oxyde de silicium par exemple, afin de combler les espaces entre chaque miroir de Bragg inférieur. Cette étape peut être suivie d'étapes optionnelles de planarisation par polissage mécanico-chimique apportant les mêmes avantages que ceux précédemment décrits.

La figure 6j illustre le retournement du deuxième substrat 30 selon la direction (x).

La figure 6k illustre la formation d'une partie du canal 50. Comme précédemment, cette formation peut avantageusement être réalisée par gravure.

La figure 6l illustre l'assemblage, par collage moléculaire par exemple, du premier substrat 20 avec le deuxième substrat 30.

Cet assemblage est réalisé de sorte que l'entrée optique 20a et la pluralité de miroirs de Bragg inférieurs 33 soient situées de part et d'autre du canal 50 et de la première pluralité de surfaces réfléchissantes 22 et du miroir de Bragg supérieur 23.

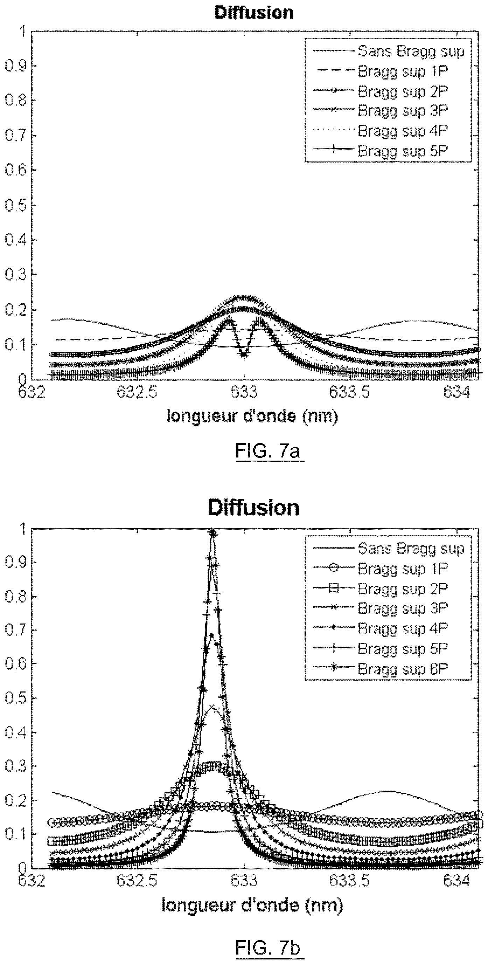

Les figures 7a et 7b illustrent deux simulations présentant le signal diffusé mesuré par la matrice 41 de photodétecteurs 42 en fonction du nombre de périodes P d'alternance de couches SiN et de couches SiO$_2$ du miroir de Bragg supérieur 23. Ce signal diffusé est normalisé relativement au signal de la pompe.

La figure 7a correspond au deuxième mode de réalisation, c'est-à-dire au celui illustré en figure 3 et comprenant un miroir de Bragg supérieur et une deuxième pluralité de surfaces réfléchissantes 32 formée par des surfaces réfléchissantes autres que des miroirs de Bragg, par exemple des surfaces métalliques.

La figure 7b correspond au cas où le détecteur de particules comprend la pluralité de miroirs de Bragg inférieurs 33 ayant 20 périodes P et comprenant une alternance de SiN et de SiO$_2$, c'est-à-dire au cas du troisième mode de réalisation illustré en figure 5.

Ces deux simulations illustrent parfaitement que l'utilisation de miroirs métalliques formant la deuxième pluralité de surfaces réfléchissantes 32 induit des pertes par absorption qui limitent l'amplification du signal diffusé à un facteur sensiblement égal à 2.

Dans le cas de l'utilisation d'une pluralité de miroirs de Bragg inférieurs 33, le couplage critique permet de pouvoir diffuser près de 100% du rayonnement lumineux incident, soit une amplification du signal diffusé sensiblement égale à un facteur 10. Il a été déterminé que cette amplification est atteinte pour un nombre de périodes P d'alternance du miroir de Bragg supérieur 23 égale à 6.

Pour la réalisation de ces simulations, les paramètres et hypothèses suivantes ont été utilisés :
On peut considérer les particules 60 présentes dans le canal 50 comme un milieu d'indice de réfraction complexe: $\tilde{n} = n + ik$ où $k$ représente des pertes par diffraction.

On peut montrer par calculs que $k$ est relié à la topologie du milieu par :

$$k = -\frac{\lambda}{4\pi}\ln(1 - \pi r^2 Q_{scatt} C)$$

Où :

  ◦ $\lambda$ est la longueur d'onde (en micromètre ($\mu$m)) ;
  ◦ $r$ est le rayon des particules (en $\mu$m) ;
  ◦ $Q_{scatt}$ est l'efficacité de diffraction d'une particule (compte-tenu de son rayon et son indice de réfraction. $Q_{scatt}$ peut être déterminée par simulation numérique au travers par exemple de la théorie de la diffraction de Mie) ;
  ◦ $C$ est la concentration de particules (en nombre de particules/$\mu$m$^3$).

Numériquement, les hypothèses suivantes ont été faites afin de réaliser ces simulations :

  ◦ La longueur d'onde est : $\lambda$=633nm.
  ◦ On considère des particules de diamètre 200 nanomètre (nm), d'indice de réfraction 1,5 et une efficacité de diffraction Qscatt=0.27.
  ◦ La concentration des particules est fixée à C=10$^{11}$ particules/cm$^3$.
  ◦ On considère une cavité optique de 100$\mu$m d'épaisseur.

L'application de ces paramètres et de ces hypothèses permet de mettre en lumière l'amélioration considérable de la détection de particules dans le cas du troisième mode de réalisation relativement au deuxième mode de réalisation de la présente invention.

A titre d'exemple non limitatif, les valeurs numériques, matériaux et dimensions suivants pourront être adaptés aux différents éléments de la présente invention :
De manière préférentielle, le rayonnement lumineux incident comprend une longueur d'onde comprise entre 200nm et 2$\mu$m, de préférence entre 300nm et 1$\mu$m et avantageusement entre 400nm et 700nm.

Premier substrat :

- L'épaisseur du premier substrat est comprise entre 10$\mu$m et 1cm, de préférence entre 100$\mu$m et 1mm et avantageusement entre 300$\mu$m et 800$\mu$m.
- L'épaisseur de la première pluralité de surfaces réfléchissantes est comprise entre 50nm et 1$\mu$m, de préférence entre 75nm et 500nm et avantageusement entre 100nm et 200nm.
- Le premier substrat est formé d'au moins un matériau laissant passer au moins 50%, de préférence au moins 75% et de préférence au moins 90% dudit rayonnement lumineux incident, de préférence le premier substrat comprend un matériau transparent relativement audit rayonnement lumineux incident.
- Le premier substrat comprend au moins un matériau pris parmi les matériaux suivants : verre, plastique.

Première pluralité de surfaces réfléchissantes :

- La première pluralité de surfaces réfléchissante comprend au moins 1 surfaces réfléchissantes, de préférence au moins 10 surfaces réfléchissantes et avantageusement au moins 100 surfaces réfléchissantes.
- Les surfaces réfléchissantes de la première pluralité de surfaces réfléchissante présentent un coefficient de réflectivité égal au moins à 50%, de préférence au moins à 75% et avantageusement au moins à 90%.
- La première pluralité de surfaces réfléchissantes comprend au moins un matériau pris parmi les matériaux suivants : aluminium, cuivre, Or, Argent, tungstène.

Miroir de Bragg supérieur :

- Avantageusement, le miroir de Bragg supérieur comprend une alternance d'au moins une couche de SiO2 avec au moins une couche prises parmi les couches suivantes : SiN, TiO2, silicium amorphe.
- Le miroir de Bragg supérieur présente un nombre de périodes supérieur à 1, de préférence supérieur à 2 et avantageusement supérieur à 3.
- Le miroir de Bragg supérieur présente une période supérieure à 75 nm, de préférence à 125 nm et avantageusement à 200 nm.
- Le miroir de Bragg supérieur présente un indice de réfraction moyen compris entre 1 et 3.5, de préférence entre 1.5 et 2.5 et avantageusement entre 1.5 et 2.
- Le miroir de Bragg supérieur a une épaisseur supérieure à 100nm, de préférence supérieure à 250nm et avantageusement supérieure à 500nm.
- Le miroir de Bragg supérieur présente un coefficient de réflectivité égal au moins à 25%, de préférence au moins à 50% et avantageusement au moins à 75%.
- Le miroir de Bragg supérieur présente une surface en regard du canal de circulation des particules égale au moins à 1$\mu$m, de préférence au moins à 5$\mu$m et avantageusement au moins à 10$\mu$m.

Deuxième substrat :

- L'épaisseur du deuxième substrat est comprise entre 10$\mu$m et 1cm, de préférence entre 100$\mu$m et 1mm et avantageusement entre 300$\mu$m et 800$\mu$m.
- L'épaisseur de la deuxième pluralité de surfaces réfléchissantes est comprise entre 50nm et 1$\mu$m, de préférence entre 75nm et 500nm et avantageusement entre 100nm et 200nm.
- Le deuxième substrat est formé d'au moins un matériau laissant passer au moins 50%, de préférence au moins 75% et de préférence au moins 90% dudit rayonnement lumineux incident, de préférence le deuxième substrat comprend un matériau transparent relativement audit rayonnement lumineux incident.
- Le deuxième substrat comprend au moins un matériau pris parmi les matériaux suivants : verre, plastique.

Deuxième pluralité de surfaces réfléchissantes :

- La deuxième pluralité de surfaces réfléchissante comprend au moins 1 surfaces réfléchissantes, de préférence au moins 10 surfaces réfléchissantes et avantageusement au moins 100 surfaces réfléchissantes.
- Les surfaces réfléchissantes de la deuxième pluralité de surfaces réfléchissante présentent un coefficient de réflectivité égal au moins à 50%, de préférence au moins à 75% et avantageusement au moins à 90%.
- La deuxième pluralité de surfaces réfléchissantes comprend au moins un matériau pris parmi les matériaux suivants : aluminium, cuivre, Or, Argent, tungstène.

Pluralité de miroirs de Bragg inférieurs :

- Avantageusement, la pluralité de miroirs de Bragg inférieurs comprend une alternance d'au moins une couche de SiO2 avec au moins une couche prises parmi les couches suivantes : SiN, TiO2, silicium amorphe.
- La pluralité de miroirs de Bragg inférieurs présente un nombre de périodes supérieur à 3, de préférence supérieur à 5 et avantageusement supérieur à 10.
- La pluralité de miroirs de Bragg inférieurs présente une période supérieure à 75 nm, de préférence à 125 nm et avantageusement à 200 nm.
- La pluralité de miroirs de Bragg inférieurs présente un indice de réfraction moyen compris entre 1 et 3.5, de préférence entre 1.5 et 2.5 et avantageusement entre 1.5 et 2.
- La pluralité de miroirs de Bragg inférieurs a une épaisseur supérieure à 500nm, de préférence supérieure à 750nm et avantageusement supérieure à

1μm.

- La pluralité de miroirs de Bragg inférieurs présente un coefficient de réflectivité égal au moins à 75%, de préférence au moins à 90% et avantageusement au moins à 99%.
- La pluralité de miroirs de Bragg inférieurs présente une surface en regard du canal de circulation des particules égale au moins à $1\mu m^2$, de préférence au moins à $5\mu m^2$ et avantageusement au moins à $10\mu m^2$.
- Les surfaces réfléchissantes de la première pluralité de surface réfléchissantes peuvent présenter des formes et/ou de tailles différentes de celles de la deuxième pluralité de surface réfléchissantes.

Cavité optique :

- L'épaisseur de la cavité optique, c'est-à-dire la distance, prise selon l'axe z, séparant la première pluralité de surfaces réfléchissante de la deuxième pluralité de surfaces réfléchissante, est comprise entre 1μm et 1cm, de préférence entre 10μm et 1mm et avantageusement entre 100μm et 500μm.
- La largeur de la cavité optique, prise selon l'axe x, est comprise entre 1μm et 1mm, de préférence entre 5μm et 100μm et avantageusement entre 10μm et 50μm.
- La surface horizontale de la cavité optique, selon le plan (x, y), est comprise entre $1\mu m^2$ et $1mm^2$, de préférence entre $25\mu m^2$ et $10^4\mu m^2$ et avantageusement entre $100\mu m^2$ et $2500\mu m^2$.
- La cavité optique présente un facteur de qualité supérieur à 10, de préférence supérieur à 100 et avantageusement supérieur à 1000.

Canal de circulation des particules :

- L'épaisseur du canal, prise selon l'axe z, est comprise entre 1μm et 1cm de préférence entre 10μm et 1mm et avantageusement entre 10μm et 500μm.
- La largeur du canal, prise selon l'axe x, est comprise entre 10μm et 10cm, de préférence entre 100μm et 1cm et avantageusement entre 100μm et 1mm.
- La longueur du canal, prise selon l'axe y, est comprise entre 10μm et 10cm, de préférence entre 100μm et 1cm et avantageusement entre 100μm et 1mm.

Il est à noter que la présente invention peut également être appliquée à des fluides liquides véhiculant des particules. Ainsi, dans la présente description, un « fluide » se comprend comme un corps dont les constituants, les particules par exemple, ont peu d'adhésion et peuvent glisser librement les unes sur les autres, dans le cas d'un liquide, ou se déplacer indépendamment les unes des autres, dans le cas d'un gaz. Selon cette définition, l'air est un fluide, ainsi que l'eau. Un fluide peut transporter des particules, comme des particules nanométriques transportées par l'air par exemple.

Il est à noter qu'une très faible rugosité au niveau de la surface de chaque interface de la présente invention permet de minimiser, voire d'éviter, la présence de rayons lumineux diffusés lors du passage des rayons lumineux au travers de ces interfaces.

En effet, afin de satisfaire aux conditions rigoureuses de la détection de particules par la mesure d'un diagramme de diffraction, il convient de limiter au maximum la rugosité des interfaces.

Cette rugosité, si elle est trop importante, peut induire une diffraction parasite, dite diffraction de fond, mesurée par les photodétecteurs 42 même en l'absence de particules 60 dans le canal 50. Un traitement des signaux mesurés peut permettre de réduire cette nuisance, néanmoins les procédés décrits ici assurent une rugosité aux interfaces très faible réduisant les problèmes de diffraction parasite. La précision de la détection est ainsi améliorée.

La matrice de photodétecteurs peut avantageusement être périodique ou apériodique et présenter une forme polygonale ou circulaire.

Le canal peut être ouvert ou fermé selon l'axe x ou y. De préférence, il est ouvert.

De manière avantageuse, un certain nombre d'ouvertures peuvent être réalisées, traversant entièrement le premier substrat, et débouchant dans le canal, de sorte à permettre aux particules d'entrer et de sortir du canal.

Les particules ne sont donc pas nécessairement stationnaires dans le canal mais le traversent et/ou se déplacent dans le canal.

La mise en oeuvre de la présente invention peut comprendre l'utilisation de divers outils mathématiques et informatiques afin d'extraire depuis les mesures des photodétecteurs, des paramètres intrinsèques des particules comme leur taille par exemple.

L'homme du métier peut trouver de tels outils dans les références suivantes : "The Mie Theory: Basics and Applications"; Wolfram Hergert, Thomas Wriedt; Springer, 30 juin 2012 - 259 pages ou "Light scattering and surface plasmons on small spherical particles", Xiaofeng Fan, Weitao Zheng and David J Singh, Light: Science & Applications (2014) 3 ou encore J. R. Hodkinson and I. Greenleaves, "Computations of Light-Scattering and Extinction by Spheres According to Diffraction and Geometrical Optics, and Some Comparisons with the Mie Theory", Journal of the Optical Society of America 53, 577 (1963).

L'invention n'est pas limitée aux modes de réalisation décrits mais s'étend à tout mode de réalisation entrant dans la portée de la revendication 1 et de la revendication 15 annexées.

REFERENCES

10.     Dispositif optique
11.     Rayonnement lumineux incident
12.     Rayons lumineux diffusés
13.     Rayons lumineux diffusés réfléchis une première fois
14.     Rayons lumineux diffusés réfléchis plusieurs fois

20.     Premier substrat
20a.    Entrée Optique
21.     Premier milieu transparent
22.     Première pluralité de surfaces réfléchissantes
23.     Miroir de Bragg supérieur
24.     Passage Optique

30.     Deuxième substrat
31.     Deuxième milieu transparent
32.     Deuxième pluralité de surfaces réfléchissantes
33.     Pluralité de miroirs de Bragg inférieurs
34.     Miroir de Bragg inférieur pleine plaque

40.     Troisième substrat
41.     Matrice de photodétecteurs
42.     Photodétecteurs
43.     Ouverture optique

50.     Canal de circulation des particules
51.     Partie du canal de circulation des particules

60.     Particule(s)
61.     Circulation des particules

70.     Cavité optique

**Revendications**

**1.** Détecteur de particules comprenant au moins :

◦ un canal (50) destiné à recevoir au moins un fluide comprenant des particules (60);
◦ une entrée optique (20a) configurée pour recevoir au moins un rayonnement lumineux incident (11);

**caractérisé en ce que** le détecteur comprend en outre :

◦ une première pluralité de surfaces réfléchissantes (22) disposée entre l'entrée optique (20a) et le canal (50) ;
◦ une matrice (41) de photodétecteurs (42) disposée en regard du canal (50) ;
◦ une deuxième pluralité de surfaces réfléchissantes (32) disposée entre le canal (50) et la matrice (41) de photodétecteurs (42) et de sorte que le canal (50) soit situé entre les première (22) et deuxième (32) pluralités de surfaces réfléchissantes ;

la première (22) et la deuxième (32) pluralités de surfaces réfléchissantes, la matrice (41) de photodétecteurs (42) et le canal (50) étant disposés de sorte à ce que une partie au moins du rayonnement lumineux incident (11) traversant le canal (50) soit diffusée par au moins une particule (60) présente dans le canal (50) formant ainsi des rayons lumineux diffusés (12), les surfaces réfléchissantes de la deuxième pluralité (32) s'étendant principalement selon un plan et étant espacées les unes des autres dans ce plan pour ménager entre elles des espaces (43), de sorte qu'une partie au moins des rayons lumineux diffusés (12) peuvent passer du canal (50) à la matrice (41) de photodétecteurs (42) en passant par lesdits espaces (43) entre les surfaces réfléchissantes de la deuxième pluralités de surfaces réfléchissantes (32) et sans traverser de surface réfléchissante de ladite deuxième pluralité (32).

**2.** Détecteur selon la revendication précédente dans lequel la première (22) et la deuxième (32) pluralités de surfaces réfléchissantes, la matrice (41) de photodétecteurs (42) et le canal (50) sont disposés de sorte qu'une partie au moins desdits rayons lumineux diffusés (12) se réfléchisse sur au moins une surface réfléchissante de la première pluralité de surfaces réfléchissantes (22), puis parvienne ensuite sur la matrice (41) de photodétecteurs (42) en passant entre les surfaces réfléchissantes de la deuxième pluralités de surfaces réfléchissantes (32)

**3.** Détecteur selon l'une quelconque des revendications précédentes dans lequel les première (22) et deuxième (32) pluralités de surfaces réfléchissantes sont agencées de manière complémentaire de sorte à ce que tous les photodétecteurs (42) de la matrice (41) disposés au droit de l'au moins une entrée optique (20a) soient masqués par au moins une surface réfléchissante de l'une parmi la première (22) et la deuxième (32) pluralité de surfaces réfléchissantes.

**4.** Détecteur selon l'une quelconque des revendications précédentes dans lequel les première (22) et deuxième (32) pluralités de surfaces réfléchissantes sont agencées de manière complémentaire de sorte à ce que les surfaces réfléchissantes de la première (22) pluralité de surfaces réfléchissantes ne soient pas disposées au droit des surfaces réfléchissantes de la deuxième (32) pluralité de surfaces réfléchissantes.

**5.** Détecteur selon l'une quelconque des revendications précédentes configuré de sorte qu'une partie au moins du rayonnement lumineux incident (11) soit réfléchie par une partie au moins de la deuxième pluralité de surfaces réfléchissantes (32) avant et/ou après être diffusé par au moins une particule (60), et dans lequel les première (22) et deuxième (32) pluralités de surfaces réfléchissantes sont agencées de sorte à définir entre elles au moins une cavité optique (70), la cavité optique (70) comprenant le canal (50) et étant configurée pour qu'une partie au moins des rayons lumineux diffusés (12) soient réfléchis une pluralité de fois avant de parvenir à la matrice (41) de photodétecteurs (42).

6. Détecteur selon l'une quelconque des revendications précédentes comprenant au moins un miroir de Bragg supérieur (23) disposé entre la première pluralité de surfaces réfléchissantes (22) et le canal (50).

7. Détecteur selon l'une quelconque des revendications précédentes dans lequel la deuxième pluralité de surfaces réfléchissantes (32) comprend une pluralité de miroirs de Bragg inférieurs (33), chaque miroir de Bragg inférieur (33) étant de préférence situé au droit de l'entrée optique (20a).

8. Détecteur selon la revendication précédente prise dans sa combinaison avec la revendication 6 dans lequel l'épaisseur du miroir de Bragg supérieur (23) est inférieure à l'épaisseur de la pluralité de miroirs de Bragg inférieurs (33).

9. Détecteur selon les revendications 6 et 7 prises en combinaison, dans lequel le coefficient de réflectivité du miroir de Bragg supérieur (23) est inférieur au coefficient de réflectivité de la pluralité de miroirs de Bragg inférieurs (33).

10. Détecteur selon l'une quelconque des revendications précédentes dans lequel le canal (50) est délimité en partie au moins par un premier substrat (20) et un deuxième substrat (30), le premier substrat (20) comportant au moins la première pluralité de surfaces réfléchissantes (22), le deuxième substrat (30) comportant au moins la deuxième pluralité de surfaces réfléchissantes (30).

11. Détecteur selon l'une quelconque des revendications précédentes formant un empilement de couches, ledit empilement comprenant au moins un premier substrat (20), un deuxième substrat (30) et un troisième substrat (40), le premier substrat (20) comportant au moins la première pluralité de surfaces réfléchissantes (22), le deuxième substrat (30) comportant au moins la deuxième pluralité de surfaces réfléchissantes (32) et le troisième substrat (40) comportant au moins la matrice (41) de photodétecteurs (42), le canal (50) étant délimité en partie au moins par le premier (20) et le deuxième (30) substrats.

12. Détecteur selon l'une quelconque des revendications précédentes dans lequel les surfaces réfléchissantes de la première pluralité de surfaces réfléchissantes (22) s'étendent principalement selon un plan et sont espacées les unes des autres dans ce plan pour ménager entre elles des passages optiques (24), le détecteur étant configuré de sorte de sorte qu'une partie au moins du rayonnement incident (11) puisse pénétrer dans le canal (50) en passant par lesdits passages optiques (24) et sans traverser de surface réfléchissante de ladite première pluralité (22).

13. Détecteur selon l'une quelconque des revendications précédentes configuré de sorte qu'une partie au moins des rayons lumineux diffusés (12) peuvent passer du canal (50) à la matrice (41) de photodétecteurs (42) sans traverser lesdites première (22) et deuxième (32) pluralités de surfaces réfléchissantes.

14. Détecteur selon l'une quelconque des revendications précédentes configuré de sorte qu'une partie au moins du rayonnement lumineux incident (11) puisse parvenir au canal (50) sans traverser lesdites première (22) et deuxième (32) pluralités de surfaces réfléchissantes.

15. Procédé de fabrication d'un détecteur de particules (60), le procédé comprenant au moins les étapes suivantes :

    ◦ Fournir au moins un premier substrat (20) comprenant au moins une première pluralité de surfaces réfléchissantes (22) s'étendant selon un premier plan parallèle à un plan principal (x, y) et comprenant au moins une entrée optique (20a) configurée pour recevoir au moins un rayonnement lumineux incident (11) selon une direction inclinée par rapport, de préférence perpendiculaire (z), au plan principal (x, y) ;
    ◦ Fournir au moins un deuxième substrat (30) comportant au moins une deuxième pluralité de surfaces réfléchissantes (32), le deuxième substrat (30) s'étendant selon un deuxième plan parallèle au plan principal (x, y) ;
    ◦ Fournir au moins un troisième substrat (40) comprenant au moins une matrice (41) de photodétecteurs (42) s'étendant selon un troisième plan parallèle au plan principal (x, y) ;
    ◦ Former un empilement s'étendant dans le plan principal (x, y) en assemblant le premier substrat (20), le deuxième substrat (30) et le troisième substrat (40) de sorte que :

■ les premier (20) et deuxième (30) substrats délimitent au moins en partie, et de préférence entièrement, un canal (50) de circulation de particules (60) ;

■ les première (22) et deuxième (32) pluralités de surfaces réfléchissantes (22 et 32) soient situées entre la matrice (41) de photodétecteurs (42) et l'entrée optique (20a) ;

■ la première (22) et la deuxième (32) pluralités de surfaces réfléchissantes, la matrice (41) de photodétecteurs (42) et le canal (50) étant disposées de sorte à ce que, si des particules sont présentes dans le canal, une partie au moins du rayonnement lumineux incident (11) traversant le canal (50) soit diffusée par au moins une particule (60) présente dans le canal (50) formant ainsi des rayons lumineux diffusés (12), les surfaces réfléchissantes de la deuxième pluralité (32) s'étendant principalement selon un plan et étant espacées les unes des autres dans ce plan pour ménager entre elles des espaces (43), de sorte que les rayons lumineux diffusés (12) peuvent passer du canal à la matrice (41) de photodétecteurs (42) en passant entre les surfaces réfléchissantes de la deuxième pluralités de surfaces réfléchissantes (32) et sans traverser de surface réfléchissante de ladite deuxième pluralité (32).

## Patentansprüche

1. Partikeldetektor, umfassend mindestens:

◦ einen Kanal (50), dazu bestimmt, mindestens Partikel (60) umfassendes Fluid aufzunehmen;
◦ einen optischen Eingang (20a), konfiguriert, um mindestens eine einfallende Lichtstrahlung (11) aufzunehmen;

**dadurch gekennzeichnet, dass** der Detektor des Weiteren umfasst:

◦ eine erste Vielzahl von reflektierenden Oberflächen (22), angeordnet zwischen dem optischen Eingang (20a) und dem Kanal (50);
◦ eine Matrix (41) von dem Kanal (50) gegenüberliegend angeordneten Photodetektoren (42);
◦ eine zweite Vielzahl von reflektierenden Oberflächen (32), angeordnet zwischen dem Kanal (50) und der Matrix (41) von Photodetektoren (42) und derart, dass der Kanal (50) sich zwischen der ersten (22) und zweiten (32) Vielzahl von reflektierenden Oberflächen befindet;

wobei die erste (22) und die zweite (32) Vielzahl von reflektierenden Oberflächen, die Matrix (41) von Photodetektoren (42) und der Kanal (50) derart angeordnet sind, dass mindestens ein Teil der einfallenden Lichtstrahlung (11), die den Kanal (50) durchquert, durch mindestens ein in dem Kanal (50) vorhandenes Partikel (60) gestreut wird, um so gestreute Lichtstrahlen (12) zu bilden, wobei die reflektierenden Oberflächen der zweiten Vielzahl (32) sich hauptsächlich nach einer Ebene erstrecken und in dieser Ebene voneinander beabstandet sind, um zwischen ihnen Räume (43) derart aufzustellen, dass mindestens ein Teil der gestreuten Lichtstrahlen (12) von dem Kanal (50) zu der Matrix (41) von Photodetektoren (42) passieren können, indem sie durch die Räume (43) zwischen den reflektierenden Oberflächen der zweiten Vielzahl von reflektierenden Oberflächen (32) passieren und ohne reflektierende Oberfläche der zweiten Vielzahl (32) zu durchqueren.

2. Detektor nach dem vorstehenden Anspruch, wobei die erste (22) und die zweite (32) Vielzahl von reflektierenden Oberflächen, die Matrix (41) von Photodetektoren (42) und der Kanal (50) derart angeordnet sind, dass mindestens ein Teil der gestreuten Lichtstrahlen (12) an mindestens einer reflektierenden Oberfläche der ersten Vielzahl von reflektierenden Oberflächen (22) reflektiert wird, danach zu der Matrix (41) von Photodetektoren (42) gelangt, indem er zwischen den reflektierenden Oberflächen der zweiten Vielzahl von reflektierenden Oberflächen (32) passiert.

3. Detektor nach einem der vorstehenden Ansprüche, wobei die erste (22) und zweite (32) Vielzahl von reflektierenden Oberflächen auf eine komplementäre Weise derart angebracht sind, dass alle der Photodetektoren (42) der Matrix (41), die zur Rechten des mindestens einen optischen Eingangs (20a) angeordnet sind, durch mindestens eine reflektierende Oberfläche von einer unter der ersten (22) und der zweiten (32) Vielzahl von reflektierenden Oberflächen maskiert werden.

4. Detektor nach einem der vorstehenden Ansprüche, wobei die erste (22) und zweite (32) Vielzahl von reflektierenden Oberflächen auf eine komplementäre Weise derart angebracht sind, dass die reflektierenden Oberflächen der ersten (22) Vielzahl von reflektierenden Oberflächen nicht zur Rechten der reflektierenden Oberflächen der zweiten (32) Vielzahl von reflektierenden Oberflächen angeordnet sind.

5. Detektor nach einem der vorstehenden Ansprüche, derart konfiguriert, dass mindestens ein Teil der einfallenden Lichtstrahlung (11) durch mindestens einen Teil der zweiten Vielzahl von reflektierenden Oberflächen (32) reflektiert wird, bevor und/oder nachdem er durch mindestens ein Partikel (60) gestreut worden ist, und wobei die erste (22) und zweite (32) Vielzahl von reflektierenden Oberflächen derart angebracht sind, um zwischen ihnen mindestens einen optischen Hohlraum (70) zu definieren, wobei der optische Hohlraum (70) den Kanal (50) umfasst und konfiguriert ist, damit mindestens ein Teil der gestreuten Lichtstrahlen (12) eine Vielzahl von Malen reflektiert wird, bevor er zu der Matrix (41) von Photodetektoren (42) gelangt.

6. Detektor nach einem der vorstehenden Ansprüche, umfassend mindestens einen oberen Bragg-Spiegel (23), angeordnet zwischen der ersten Vielzahl von reflektierenden Oberflächen (22) und dem Kanal (50).

7. Detektor nach einem der vorstehenden Ansprüche, wobei die zweite Vielzahl von reflektierenden Oberflächen (32) eine Vielzahl von unteren Bragg-Spiegeln (33) umfasst, wobei jeder untere Bragg-Spiegel (33) sich vorzugsweise zur Rechten des optischen Eingangs (20a) befindet.

8. Detektor nach dem vorstehenden Anspruch, in Kombination genommen mit Anspruch 6, wobei die Dicke des oberen Bragg-Spiegels (23) unter der Dicke der Vielzahl von unteren Bragg-Spiegeln (33) liegt.

9. Detektor nach Ansprüchen 6 und 7, in Kombination genommen, wobei der Reflektivitätskoeffizient des oberen Bragg-Spiegels (23) unter dem Reflektivitätskoeffizienten der Vielzahl von unteren Bragg-Spiegeln (33) liegt.

10. Detektor nach einem der vorstehenden Ansprüche, wobei der Kanal (50) mindestens teilweise durch ein erstes Substrat (20) und ein zweites Substrat (30) abgegrenzt ist, wobei das erste Substrat (20) mindestens die erste Vielzahl von reflektierenden Oberflächen (22) beinhaltet, das zweite Substrat (30) mindestens die zweite Vielzahl von reflektierenden Oberflächen (30) beinhaltet.

11. Detektor nach einem der vorstehenden Ansprüche, der eine Stapelung von Schichten bildet, wobei die Stapelung mindestens ein erstes Substrat (20), ein zweites Substrat (30) und ein drittes Substrat (40) umfasst, wobei das erste Substrat (20) mindestens die erste Vielzahl von reflektierenden Oberflächen (22) beinhaltet, das zweite Substrat (30) mindestens die zweite Vielzahl von reflektierenden Oberflächen (32) beinhaltet, und das dritte Substrat (40) mindestens die Matrix (41) von Photodetektoren (42) beinhaltet, wobei der Kanal (50) mindestens teilweise durch das erste (20) und das zweite (30) Substrat abgegrenzt ist.

12. Detektor nach einem der vorstehenden Ansprüche, wobei die reflektierenden Oberflächen der ersten Vielzahl von reflektierenden Oberflächen (22) sich hauptsächlich nach einer Ebene erstrecken und in dieser Ebene voneinander beabstandet sind, um zwischen ihnen optische Durchgänge (24) aufzustellen, wobei der Detektor derart konfiguriert ist, dass mindestens ein Teil der einfallenden Strahlung (11) in den Kanal (50) eindringen kann, indem er die optischen Durchgänge (24) passiert und ohne von reflektierender Oberfläche der ersten Vielzahl (22) zu durchqueren.

13. Detektor nach einem der vorstehenden Ansprüche, derart konfiguriert, dass mindestens ein Teil der gestreuten Lichtstrahlen (12) den Kanal (50) zu der Matrix (41) von Photodetektoren (42) passieren kann, ohne die erste (22) und zweite (32) Vielzahl von reflektierenden Oberflächen zu durchqueren.

14. Detektor nach einem der vorstehenden Ansprüche, derart konfiguriert, dass mindestens ein Teil der einfallenden Lichtstrahlung (11) zu dem Kanal (50) gelangen kann, ohne die erste (22) und zweite (32) Vielzahl von reflektierenden Oberflächen zu durchqueren.

15. Herstellungsverfahren eines Partikeldetektors (60), wobei das Verfahren mindestens die folgenden Schritte umfasst:

    ◦ Bereitstellen mindestens eines ersten Substrats (20), umfassend mindestens eine erste Vielzahl von reflektierenden Oberflächen (22), die sich nach einer ersten Ebene parallel zu einer Hauptebene (x, y) erstrecken und umfassend mindestens einen optischen Eingang (20a), konfiguriert, um mindestens eine einfallende Lichtstrahlung (11) nach einer bezüglich der Hauptebene (x, y) vorzugsweise senkrecht (z) geneigten Richtung aufzunehmen;
    ◦ Bereitstellen mindestens eines zweiten Substrats (30), beinhaltend mindestens eine zweite Vielzahl von reflektierenden Oberflächen (32), wobei das zweite Substrat (30) sich nach einer zweiten Ebene parallel zur Hauptebene (x, y) erstreckt;
    ◦ Bereitstellen mindestens eines dritten Substrats (40), umfassend mindestens eine Matrix (41) von Photodetektoren (42), die sich nach einer dritten Ebene parallel zur Hauptebene (x, y) erstreckt;
    ◦ Bilden einer Stapelung, die sich in der Hauptebene (x, y) erstreckt, indem das erste Substrat (20), das zweite Substrat (30) und das dritte Substrat (40) derart zusammengefügt werden, dass:

• das erste (20) und zweite (30) Substrat mindestens teilweise und bevorzugt ganz, einen Zirkulationskanal (50) von Partikel (60) abgrenzt;

• die erste (22) und zweite (32) Vielzahl von reflektierenden Oberflächen (22 und 32) sich zwischen der Matrix (41) von Photodetektoren (42) und dem optischen Eingang (20a) befinden;

• die erste (22) und die zweite (32) Vielzahl von reflektierenden Oberflächen, die Matrix (41) von Photodetektoren (42) und der Kanal (50) derart angeordnet sind, dass, wenn Partikel in dem Kanal vorhanden sind, mindestens ein Teil der einfallenden Lichtstrahlung (11), die den Kanal (50) durchquert, durch mindestens ein in dem Kanal (50) vorhandenes Partikel (60) gestreut wird, um so gestreute Lichtstrahlen (12) zu bilden, wobei die reflektierenden Oberflächen der zweiten Vielzahl (32) sich hauptsächlich nach einer Ebene erstrecken und in dieser Ebene voneinander beabstandet sind, um zwischen ihnen Räume (43) derart aufzustellen, dass die gestreuten Lichtstrahlen (12) von dem Kanal zu der Matrix (41) von Photodetektoren (42) passieren können, indem sie zwischen den reflektierenden Oberflächen der zweiten Vielzahl von reflektierenden Oberflächen (32) passieren und ohne reflektierende Oberfläche der zweiten Vielzahl (32) zu durchqueren.

**Claims**

1. A particle detector comprising at least:

   ○ one channel (50) for receiving at least one fluid comprising particles (60);
   ○ one optical input (20a) configured to receive at least one incident light radiation (11);

   **characterised in that** the detector further comprises:

   ○ a first plurality of reflecting surfaces (22) disposed between the optical input (20a) and the channel (50);
   ○ an array (41) of photodetectors (42) facing the channel (50);
   ○ a second plurality of reflecting surfaces (32) disposed between the channel (50) and the array (41) of photodetectors (42) and so that the channel (50) is located between the first (22) and second (32) plurality of reflecting surfaces;

   the first (22) and second (32) pluralities of reflecting surfaces, the array (41) of photodetectors (42) and the channel (50) being disposed so that at least part of the incident light radiation (11) going through the channel (50) is scattered by at least one particle (60) present in the channel (50) thus forming scattered light rays (12), the reflecting surfaces of the second plurality (32) mainly extending along a plane and being spaced apart from each other in this plane to provide spaces (43) therebetween, so that at least part of the scattered light rays (12) can pass from the channel (50) to the array (41) of photodetectors (42) by passing through said spaces (43) between the reflecting surfaces of the second plurality of reflecting surfaces (32) and without going through any reflecting surface of said second plurality (32).

2. The detector according to the previous claim, wherein the first (22) and second (32) pluralities of reflecting surfaces, the array (41) of photodetectors (42) and the channel (50) are disposed such that at least part of said scattered light rays (12) is reflected on at least one reflecting surface of the first plurality of reflecting surfaces (22), and then reaches the array (41) of photodetectors (42) by passing between the reflecting surfaces of the second plurality of reflecting surfaces (32).

3. The detector according to any one of the previous claims, wherein the first (22) and second (32) pluralities of reflecting surfaces are complementarily arranged so that all the photodetectors (42) of the array (41) disposed in line with at least one optical input (20a) are hidden by the at least one reflecting surface of one of the first (22) and second (32) pluralities of reflecting surfaces.

4. The detector according to any of the previous claims, wherein the first (22) and second (32) pluralities of reflecting surfaces are complementarily arranged so that the reflecting surfaces of the first (22) plurality of reflecting surfaces are not disposed in line with the reflecting surfaces of the second (32) plurality of reflecting surfaces.

5. The detector according to any one of the previous claims, configured so that at least part of the incident light radiation (11) is reflected by at least part of the second plurality of reflecting surfaces (32) before and/or after being scattered by at least one particle (60), and wherein the first (22) and second (32) pluralities of reflecting surfaces are arranged so as to define at least one optical cavity (70) therebetween, the optical cavity (70) comprising the channel (50) and being configured so that at least part of the scattered light rays (12) are reflected a plurality of times before reaching the array (41) of photodetectors (42).

6. The detector according to any of the previous claims comprising at least one upper Bragg mirror (23) disposed between the first plurality of reflecting surfaces (22) and the channel (50).

7. The detector according to any of the previous claims, wherein the second plurality of reflecting surfaces (32) comprises a plurality of lower Bragg mirrors (33), each lower Bragg mirror (33) being preferably situated in line with the optical input (20a).

8. The detector according to any of the previous claims, taken in combination with claim 6, wherein the thickness of the upper Bragg mirror (23) is less than the thickness of the plurality of lower Bragg mirrors (33).

9. The detector according to claims 6 and 7 taken in combination, wherein the reflectivity coefficient of the upper Bragg mirror (23) is less than the reflectivity coefficient of the plurality of lower Bragg mirrors (33).

10. The detector according to any of the previous claims, wherein the channel (50) is at least partly delimited by a first substrate (20) and a second substrate (30), the first substrate (20) including at least the first plurality of reflecting surfaces (22), the second substrate (30) including at least the second plurality of reflecting surfaces (30).

11. The detector according to any of the previous claims, forming a stack of layers, said stack comprising at least a first substrate (20), a second substrate (30) and a third substrate (40), the first substrate (20) including at least the first plurality of reflecting surfaces (22), the second substrate (30) including at least the second plurality of reflecting surfaces (32), and the third substrate (40) including at least the array (41) of photodetectors (42), the channel (50) being at least partly delimited by the first (20) and second (30) substrates.

12. The detector according to any one of the previous claims, wherein the reflecting surfaces of the first plurality of reflecting surfaces (22) mainly extend along a plane and are spaced apart from each other in that plane to provide optical passages (24) therebetween, the detector being configured so that at least part of the incident radiation (11) can penetrate the channel (50) by passing through said optical passages (24) and without going through any reflecting surface of said first plurality (22).

13. The detector according to any of the previous claims, configured so that at least part of the scattered light rays (12) can pass from the channel (50) to the array (41) of photodetectors (42) without going through said first (22) and second (32) pluralities of reflecting surfaces.

14. The detector according to any of the previous claims, configured so that at least part of the incident light radiation (11) can reach the channel (50) without going through said first (22) and second (32) pluralities of reflecting surfaces.

15. A method for manufacturing a detector of particles (60), the method comprising at least the following steps of:

  ◦ providing at least one first substrate (20) comprising at least one first plurality of reflecting surfaces (22) extending along a first plane parallel to a main plane (x, y) and comprising at least one optical input (20a) configured to receive at least one incident light radiation (11) along a direction tilted relative to, preferably perpendicular (z) to the main plane (x, y);
  ◦ providing at least one second substrate (30) including at least one second plurality of reflecting surfaces (32), the second substrate (30) extending along a second plane parallel to the main plane (x, y);
  ◦ providing at least one third substrate (40) comprising at least one array (41) of photodetectors (42) extending along a third plane parallel to the main plane (x, y);
  ◦ forming a stack extending in the main plane (x, y) by assembling the first substrate (20), the second substrate (30) and the third substrate (40) so that:

    • the first (20) and second (30) substrates at least partly, and preferably entirely, delimit a channel (50) for circulating particles (60);
    • the first (22) and second (32) pluralities of reflecting surfaces (22 and 32) are situated between the array (41) of photodetectors (42) and the optical input (20a);
    • the first (22) and second (32) pluralities of reflecting surfaces, the array (41) of photodetectors (42) and the channel (50) being disposed so that, if particles are present in the channel, at least part of the incident light radiation (11) going through the channel (50) is scattered by at least one particle (60) present in the channel (50) thus forming scattered light rays (12), the reflecting surfaces of the second plurality (32) mainly extending along a plane and being spaced apart from each other in this plane to provide spaces (43) therebetween, so that the scattered light rays (12) can pass from the channel to the array (41) of photodetectors (42) by passing between the reflecting surfaces of the second plurality of reflecting surfaces (32) and without going through any reflective surface of said second plurality (32).

A-A

FIG. 1

FIG. 2a

FIG. 2b

FIG. 2c

FIG. 2d

FIG. 2e

FIG. 2f

FIG. 2g

FIG. 2h

FIG. 2i

A-A

FIG. 3

FIG. 4a
FIG. 4b
FIG. 4c
FIG. 4d
FIG. 4e
FIG. 4f
FIG. 4g
FIG. 4h
FIG. 4i

A-A

FIG. 5

20

21

z
y
x

A-A    **FIG. 6a**

20a

31

z
y
x

A-A    **FIG. 6e**

20

22

z
y
x

A-A    **FIG. 6b**

34

z
y
x

A-A    **FIG. 6f**

23    24    24    20

z
y
x

A-A    **FIG. 6c**

33

z
y
x

A-A    **FIG. 6g**

20

23

21

22

A    A

y
x
z

**FIG. 6d**

30    31

A    A

33

y
x
z

**FIG. 6h**

A-A    FIG. 6i

A-A    FIG. 6j

A-A    FIG. 6k

A-A    FIG. 6l

**Diffusion**

FIG. 7a

**Diffusion**

FIG. 7b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5793485 A
- CN 104280321 A
- FR 2963101

**Littérature non-brevet citée dans la description**

- The Mie Theory: Basics and Applications. **THOMAS WRIEDT.** Wolfram Hergert. Springer, 30 Juin 2012, 259
- **XIAOFENG FAN ; WEITAO ZHENG ; DAVID J SINGH.** Light scattering and surface plasmons on small spherical particles. *Light: Science & Applications,* 2014, 3
- **J. R. HODKINSON ; I. GREENLEAVES.** Computations of Light-Scattering and Extinction by Spheres According to Diffraction and Geometrical Optics, and Some Comparisons with the Mie Theory. *Journal of the Optical Society of America,* 1963, vol. 53, 577
- The Mie Theory. **WOLFRAM HERGERT ; THOMAS WRIEDT.** Basics and Applications. Springer, 30 Juin 2012, 259